# EUROPÄISCHE PATENTSCHRIFT

(11) **EP 3 704 718 B1**
(45) Veröffentlichungstag und Bekanntmachung des Hinweises auf die Patenterteilung: **09.06.2021**
(21) Anmeldenummer: 18789183.3
(22) Anmeldetag: 25.10.2018
(51) Int. Cl.: G21G 1/02, G21C 23/00

(54) **VORRICHTUNG UND VERFAHREN ZUM WAHLWEISEN DURCHFÜHREN VON NUKLIDAKTIVIERUNGEN UND MESSUNGEN IN EINEM KERNREAKTOR MITTELS NUKLIDAKTIVIERUNGS-TARGETS UND MESSKÖRPERN**
NUCLIDE ACTIVATION SYSTEM
DISPOSITIF D'ACTIVATIONS DE NUCLÉIDES

(30) Priorität: 02.11.2017 EP 17199688
(43) Veröffentlichungstag der Anmeldung: 09.09.2020
(73) Patentinhaber: Kernkraftwerk Gösgen-Däniken AG, 4658 Däniken (CH)
(72) Erfinder: BITTERLI, Beat, 5034 Suhr (CH); KAULBARSCH, Rainer, 5200 Brugg (CH); CONUS, Lucien, 4656 Starrkirch-Will (CH); HEYDECKER, Kurt, 4655 Stüsslingen (CH); ORNOT, Leo, 5036 Oberentfelden (CH); MEYER, Lukas, 4710 Balsthal (CH); PAULING, Dirk, 5102 Rupperswil (CH); AEBI, Patrick, 6343 Rotkreuz (CH)
(74) Vertreter: Bohest AG
(86) Internationale Anmeldenummer: PCT/EP2018/079322
(87) Internationale Veröffentlichungsnummer: WO 2019/086329

(56) Entgegenhaltungen:
- US-A1- 2011 051 875
- US-B2- 9 305 673

## Beschreibung

Die vorliegende Erfindung betrifft eine Vorrichtung zum wahlweisen Transferieren von Nuklidaktivierungs-Targets und Messkörpern in bzw. aus einem Instrumentationsfinger eines Kernreaktors. Die Erfindung betrifft ferner ein Verfahren zum Aktivieren von Nuklidaktivierungs-Targets und optional zum energetischen Anregen von Messkörpern in einem Instrumentationsfinger eines Kernreaktors unter Verwendung einer derartigen Vorrichtung.

Radionuklide finden Anwendung in vielen Bereichen der Technik und Medizin, insbesondere in der Nuklearmedizin. Zur Erzeugung von Radionukliden werden typischerweise entsprechend geeignete stabile Nuklide mit Neutronen bestrahlt. Hierdurch entstehen durch Neutroneneinfang instabile Nuklide, die sich unter Aussendung von Alpha-, Beta, Gamma- oder Protonenstrahlung über radioaktive Zerfallsreihen wieder in stabile Nuklide umwandeln. Die Bestrahlung mit Neutronen, auch Nuklidaktivierung genannt, erfolgt zumeist in Forschungsreaktoren, die jedoch für die Massenproduktion von Radionukliden hinsichtlich ihrer Kapazität zumeist beschränkt sind. Alternativ wurde vorgeschlagen, kommerzielle, für die Energiegewinnung genutzte Kernreaktoren als Neutronenquelle für die Radionuklid-Produktion zu verwenden. Hierzu ist es angedacht, sogenannte Nuklidaktivierungs-Targets in einen oder mehrere Instrumentationsfinger eines kommerziellen Kernreaktors einzubringen, um dort durch die von den Kernbrennstäben emittierte Strahlung aktiviert zu werden. Aus EP 2 093 773 A2 und US 2013/0170927 A1 sind entsprechende Vorrichtungen und Verfahren zum Einbringen und Entnehmen von Nuklidaktivierungs-Targets in bzw. aus einem Kernreaktor bekannt.

Die zur Aufnahme der Targets verwendeten Instrumentationsfinger sind in aller Regel bereits vorhandene Röhren, die innerhalb des Reaktorkerns parallel zu den Kernbrennstäben verlaufen und zumeist Teil eines sogenannten Kugel- oder Kugelschussmesssystems zur Bestimmung der Leistungsdichteverteilung im Reaktorkern sind. In einem solchen System werden Messkugeln mit aktivierbarer Materie, beispielsweise aus Vanadium, zwecks Bestrahlung von Messkörpern in die Instrumentationsfinger des Reaktorkerns eingefüllt. Aufgrund ihres im Vergleich zum Instrumentationsfinger nur geringfügig kleineren Durchmessers liegen die Kugeln in den Fingern kettenartig unmittelbar an- bzw. aufeinander. Die Kugeln werden durch die emittierte Strahlung der Kernbrennstäbe aktiviert und nach einer vorbestimmten Verweildauer über ein Leitungssystem aus dem Reaktorkernbereich in eine Messeinrichtung, den sogenannten Messtisch, zwecks Bestimmung ihrer Aktivität transportiert. Das Leitungssystem inklusive Instrumentationsfinger ist in sich geschlossen und weist einen Durchmesser im Bereich des Kugeldurchmessers auf, so dass die Reihenfolge der Kugelkette im Instrumentationsfinger beim Transfer auf den Messtisch erhalten bleibt. Auf diese Weise können die Kugeln in der Kette einer jeweiligen Längsposition der Kernbrennstäbe zugeordnet werden, was wiederum Rückschlüsse auf die axiale Leistungsdichteverteilung des Neutronenflusses im Reaktorkern erlaubt. Ein derartiges Messsystem, auch Kugelmesssystem oder Kugelschussmesssystem genannt, mit Messvorrichtung und entsprechendem Leitungssystem ist beispielsweise aus US 3 711 714 bekannt. Die über die Kugelmessung gewonnenen Erkenntnisse dienen der Reaktorsicherheit und sind daher zumeist in regelmässigen Zeitabständen zwingend vorgeschrieben. Grundsätzlich sind auch andere Messsysteme mit Instrumentationsfingern und entsprechenden Messkörpern bekannt, die zum Messen anderer durch energetisches Anregen im Kernreaktor veränderlicher Eigenschaften der Messkörper dienen, welche die Eigenschaften der Brennstäbe und die Verhältnisse im Inneren des Reaktorkerns charakterisieren.

Während die Messkörper zum energetischen Anregen zwecks Bestimmung einer spezifischen Eigenschaft der Brennstäbe oder der Verhältnisse im Inneren des Reaktorkerns, etwa zur Bestimmung der Leistungsdichteverteilung, nur wenige Minuten im Instrumentationsfinger verweilen, sind für eine ausreichende Nuklidaktivierung der Targets mehrere Tage oder Wochen nötig. Während dieser Zeit stehen bei den bisher vorgeschlagenen Nuklidaktivierungssystemen die für die Radionuklidproduktion verwendeten Instrumentationsfinger für eine Messung nicht zur Verfügung. Zudem erfordern die bisher vorgeschlagenen Nuklidaktivierungssysteme ein Ab- und Umkoppeln des jeweiligen Instrumentationsfingers vom Messsystem an das Nuklidaktivierungssystem und wieder zurück. Ein Wechsel zwischen Nuklidaktivierung und Messung ist daher nur mit einem erhöhten technischen Aufwand möglich und birgt zudem ein durch das Ab- und Umkoppeln bedingtes zusätzliches Kontaminationsrisiko. Beides hat dazu beigetragen, dass die Implementierung eines Nuklidaktivierungssystems in einem kommerziellen Kernreaktor bisher auf wenig Akzeptanz gestossen ist.

Aufgabe der vorliegenden Erfindung ist es daher, eine Vorrichtung und ein Verfahren bereitzustellen, die einerseits eine technisch akzeptable Nutzung der Instrumentationsfinger eines Kernreaktors zur Target-Aktivierung ermöglichen, andererseits aber zu einer beliebigen Zeit die Durchführung einer Messung, etwa eine Kugelschussmessung zur Bestimmung der Leistungsdichteverteilung bzw. des Neutronenflusses, im Reaktorkern erlauben.

Diese Aufgabe wird durch eine Vorrichtung zum wahlweisen Transferieren von Nuklidaktivierungs-Targets und Messkörpern in bzw. aus einem Instrumentationsfinger eines Kernreaktors gemäss Anspruch 1 sowie durch ein Verfahren zum Aktivieren von Nuklidaktivierungs-Targets und optional zum energetischen Anregen von Messkörpern in einem Instrumentationsfinger eines Kernreaktors unter Verwendung einer derartigen Vorrichtung gemäss Anspruch 13 gelöst. Vorteilhafte Ausgestaltungen der Erfindung sind Gegenstand der abhängigen Ansprüche.

Gemäss der Erfindung weist die Vorrichtung ein Leitungssystem zum Aufnehmen und Transportieren der Messkugeln und Targets auf, das mehrere in einer Mehrwege-Armatur mündende Leitungszweige umfasst, die über die schaltbare Mehrwege-Armatur wahlweise miteinander in Strömungsverbindung gebracht werden können. Erfindungsgemäss umfasst das Leitungssystem wenigstens einen Reaktorzweig mit einer endseitigen Kupplung zum Ankoppeln des Leitungssystems an den Instrumentationsfinger, einen Speicherzweig zum Zwischenspeichern der Messkörper oder Targets und einen Messzweig mit einer endseitigen Kupplung zum Ankoppeln des Leitungssystems an eine Messeinrichtung zum Bestimmen einer durch energetisches Anregen im Kernreaktor veränderlichen Eigenschaft der Messkörper. Wenigstens der Reaktorzweig, der Speicherzweig und der Messzweig münden knotenpunktartig in die Mehrwege-Armatur der Vorrichtung. Die schaltbare Mehrwege-Armatur ist dazu ausgebildet, in einer ersten Schaltstellung den Reaktorzweig mit dem Speicherzweig und in einer zweiten Schaltstellung den Reaktorzweig mit dem Messzweig strömungsmässig zu verbinden. Die Vorrichtung weist ferner eine pneumatische oder mechanische Transporteinrichtung zum Transportieren der Messkörper und Targets durch die Vorrichtung auf. Das Leitungssystem und die Mehrwege-Armatur sind insbesondere fluid- und festkörperführend.

In erfindungsgemässer Weise wurde erkannt, dass es durch das Vorsehen eines Speicherzweigs im Leitungssystem erstmals möglich ist, einen laufenden Target-Aktivierungsprozess jederzeit zum Zwecke einer priorisierten Messung zu unterbrechen und die teilbestrahlten Nuklidaktivierungs-Targets vorübergehend im Speicherzweig zu parken bzw. zwischen zu speichern, um so den für die Aktivierung genutzten Instrumentationsfinger kurzzeitig für eine priorisierte Messung, etwa eine Kugelmessung zur Bestimmung der Leistungsdichte, freizugeben und anschliessend wieder mit den zwischengespeicherten Targets zur Fortführung des Aktivierungsprozess zu befüllen. In vorteilhafter Weise wird somit erreicht, dass der Instrumentationsfinger flexibel bzw. mehrfach genutzt werden kann, insbesondere jederzeit für eine Messung zur Verfügung steht, wenn diese gemäss den Betriebsvorschriften des Kernreaktors notwendig wird. Im Ergebnis kann daher einerseits die Betriebssicherheit gewährleistet und andererseits der ansonsten ungenutzte Instrumentationsfinger zusätzlich kommerziell für die Herstellung von Radionukliden verwenden werden. Das hierdurch zusätzlich gewonnene Ausnutzungspotential des Kernreaktors wird offensichtlich, wenn man berücksichtigt, dass die meisten vorgeschriebenen Messungen, etwa Kugelmessungen zur Bestimmung der Leistungsdichte, nicht täglich notwendig sind und entsprechende Messkörper hierfür typischerweise nur wenige Minuten im Instrumentationsfinger verweilen. Während der übrigen Zeit steht der Instrumentationsfinger für die Nuklidaktivierung zur freien Verfügung.

Bevorzugt entspricht die Länge des Speicherzweigs wenigstens der Länge des Instrumentationsfingers, so dass die entsprechend der Länge des Instrumentationsfingers maximal mögliche Target-Menge im Speicherzweig zwischengeparkt werden kann. Gemäss einer vorteilhaften Ausgestaltung beträgt die Länge des Speicherzweigs wenigstens 5 m, insbesondere wenigstens 10 m, vorzugsweise wenigstens 30 m. Ferner weist der Speicherzweig bevorzugt einen im Wesentlichen geradlinigen, insbesondere im Wesentlichen horizontal ausgerichteten Abschnitt auf. Alternativ kann der Speicherzweig zumindest abschnittsweise spiralförmig ausgebildet sein, wodurch sich eine besonders platzsparende Ausgestaltung ergibt.

Zudem wird durch die erfindungsgemäss geschaffene Möglichkeit, einen Nuklidaktivierungsprozess jederzeit unterbrechen und kurzfristig eine Messung durchführen zu können, in vorteilhafter Weise erreicht, dass mehrere, insbesondere grundsätzlich alle vorhandenen Instrumentationsfinger eines Kernreaktors unter Wahrung der betrieblichen Sicherheitsvorschriften zur Radionuklid-Produktion genutzt werden können. Hierzu kann es vorgesehen sein, dass mehrere oder alle Instrumentationsfinger eines Kernreaktors mit einer erfindungsgemässen Vorrichtung ausgestattet sind oder dass die die erfindungsgemässen Vorrichtung zum Bedienen mehrerer Instrumentationsfinger, d.h. zum wahlweisen Transferieren von Nuklidaktivierungs-Targets und Messkörpern in bzw. aus mehreren Instrumentationsfinger eines Kernreaktors ausgebildet ist.

Die schaltbare Mehrwege-Armatur erlaubt es dabei - nach einmal erfolgter Implementierung der erfindungsgemässen Vorrichtung - in technisch sehr einfacher Weise, im laufenden Betrieb des Reaktors - ohne weiteren Umbau des Systems, insbesondere ohne Öffnung des geschlossenen Leitungssystems - zwischen der Produktion von Radionukliden und einer Messung mittels Messkörpern umzuschalten. In vorteilhafter Weise wird hierdurch das Kontaminationsrisiko auf ein Minimum reduziert. Die schaltbare Mehrwege-Armatur dient insoweit als Weiche, um die verschiedene Transportwege zwischen den verschiedenen Zweigen freizugeben oder zu sperren.

Zum Unterbrechen der Target-Aktivierung und Freigeben des Instrumentationsfingers werden die zuvor über das Leitungssystem in den Instrumentationsfinger eingebrachten Targets über den Reaktorzweig aus dem Instrumentationsfinger entnommen und in den Speicherzweig transferiert. Hierzu befindet sich die Mehrwege-Armatur in der ersten Schaltstellung, so dass der Reaktorzweig mit dem Speicherzweig strömungsmässig verbunden ist. Anschliessend wird die Mehrwege-Armatur in die zweite Schaltstellung überführt, um den Reaktorzweig mit dem Messzweig und somit den Instrumentationsfinger mit der Messeinrichtung, in dem sich die Messkörper typischerweise in Vorbereitung auf eine Messung befinden, strömungsmässig zu verbinden. Sodann werden die Messkugel aus der Messvorrichtung über den Messzweig, die Mehrwege-Armatur und den Reaktorzweig in den Instrumentationsfinger des Kernreaktors transferiert. Nach einer Haltezeit von wenigen Minuten werden die Messkörper wieder über denselben Weg, d.h. über den Reaktorzweig, die Mehrwege-Armatur und den Messzweig aus dem Instrumentationsfinger in die Messvorrichtung transferiert. Dort kann die durch energetisches Anregen veränderliche Eigenschaft der Messkörper bestimmt werden, etwa die Aktivität der bestrahlten Messkörper zwecks Bestimmung der Leistungsdichteverteilung des Neutronenflusses im Reaktorkern. Sobald die Messkörper in die Messvorrichtung transferiert wurden, steht der Instrumentationsfinger wieder für die Nuklidaktivierung zur Verfügung. Die Mehrwege-Armatur wird wieder in die erste Schaltstellung überführt und die teilbestrahlten Targets aus dem Speicherzweig über die Mehrwege-Armatur und den Reaktorzweig zurück in den Instrumentationsfinger transferiert, um so den Aktivierungsprozess der Targets fortzuführen bzw. abzuschliessen. In vorteilhafter Weise kann der Aktivierungsprozess grundsätzlich mehrfach, d.h. beliebig oft für eine Messung unterbrochen werden.

Nach Abschluss des Aktivierungsprozesses können die bestrahlten Targets (Radionuklide) über das Leitungssystem für ihre zweckgemässe Verwendung aus dem Instrumentationsfinger entnommen werden. Hierfür kann beispielsweise der Speicherzweig eine endseitige Kupplung zum Ankoppeln des Leitungssystems an einen Entnahmebehälter für bestrahlte Targets aufweisen. Bevorzugt weist das Leitungssystem jedoch einen separaten Entnahmezweig mit einer endseitigen Kupplung zum Ankoppeln des Leitungssystems an einen Entnahmebehälter für bestrahlte Targets auf. Der Entnahmezweig kann sich beispielsweise endseitig an den Speicherzweig anschliessen, d.h. entgegengesetzt zu jenem Ende des Speicherzweigs, das in die Mehrwege-Armatur mündet. In dieser Konfiguration kann die Vorrichtung einen in den Transportweg zwischen Speicherzweig und Entnahmezweig ein- und ausführbaren Anschlag, beispielsweise einen Magnetanschlag, zum Blockieren des Transportweges zwischen Speicherzweig und Entnahmezweig aufweisen. Dadurch kann sichergestellt werden, dass Targets oder Messkörper beim Zwischenparken im Speicherzweig zurückgehalten werden und nicht weiter in den Entnahmezweig gelangen. In beiden Varianten (Entnahme über Speicherzweig oder sich endseitig an Speicherzweig anschliessenden Entnahmezweig) kann die Mehrwege-Armatur technisch einfach ausgebildet sein, etwa als 3/2-Wege-Armatur, insbesondere mit nur einem schaltbaren Durchgangskanal.

Alternativ kann der Entnahmezweig unmittelbar in die schaltbare Mehrwege-Armatur münden. In dieser Konfiguration ist die Mehrwege-Armatur ferner dazu ausgebildet, in einer dritten Schaltstellung den Entnahmezweig mit dem Reaktorzweig oder den Entnahmezweig mit dem Speicherzweig strömungsmässig zu verbinden. In der ersten Variante (Entnahmezweig ist mit dem Reaktorzweig in der dritten Schaltstellung verbunden) lassen sich die bestrahlten Targets in vorteilhafter Weise unmittelbar auf direktem Wege aus dem Instrumentationsfinger über den Reaktorzweig, die Mehrwege-Armatur und den Entnahmezweig in einen Entnahmebehälter für bestrahlte Targets transferieren. Dies ermöglicht einen sehr schnellen und verfahrenstechnisch sehr einfachen Entnahmeprozess. Die zweite Variante (Entnahmezweig ist mit dem Speicherzweig in der dritten Schaltstellung verbunden) erlaubt die Realisierung einer technisch einfachen Mehrwege-Armatur, etwa als 4/3-Wege-Armatur, insbesondere mit nur einem schaltbaren Durchgangskanal.

Die Messeinrichtung ist zum Messen wenigstens einer durch energetisches Anregen im Kernreaktor veränderlichen Eigenschaft der Messkörper ausgebildet, d.h. einer Eigenschaft der Messkörper, die beispielsweise durch Anregung mittels bzw. Einwirkung von Strahlungsenergie oder thermischer Energie im Instrumentationsfinger des Kernreaktors beeinflussbar ist. Die veränderliche Eigenschaft der Messkörper kann insbesondere eine strahlungsabhängige oder temperaturabhängige Eigenschaft sein. Im Weiteren kann die Messeinrichtung dazu ausgebildet werden, auf Basis der Messung der veränderlichen Eigenschaft der Messkörper einen oder mehrere Parameter zu bestimmen, welche die Eigenschaften der Brennstäbe und/oder die Verhältnisse im Inneren des Reaktorkerns charakterisieren. So kann die Messeinrichtung insbesondere zum Messen der durch Bestrahlung bewirkten Aktivität der Messkörper ausgebildet sein. Im Weiteren kann die Messeinrichtung zur Bestimmung der Leistungsdichteverteilung bzw. des Neutronenflusses im Reaktorkern auf Basis der gemessenen Aktivität der Messkörper ausgebildet sein. Alternativ oder zusätzlich kann die Messeinrichtung zur Bestimmung eines temperaturbedingten bzw. durch thermische Energie bewirkten Farbumschlags ausgebildet sein. Die Bestimmung des Farbumschlags kann beispielsweise zur Bestimmung der Temperatur im Kernreaktor verwendet werden.

Die Messkörper und/oder Nuklidaktivierungs-Targets sind bevorzugt Kugeln bzw. kugelförmig. Denkbar sind aber auch andere Formen der Messkörper und/oder Nuklidaktivierungs-Targets, etwa zylindrisch oder ellipsoid. Die Form ist so gewählt, dass die Messkörper und/oder Nuklidaktivierungs-Targets ungehindert durch das Leitungssystem und den Instrumentationsfinger transportiert werden können. Der Durchmesser der Messkörper und/oder Nuklidaktivierungs-Targets ist bevorzugt nur geringfügig kleiner als der Durchmesser des Leitungssystems und des Instrumentationsfingers. Gemäss einer vorteilhaften Ausgestaltung der Erfindung liegt der Durchmesser der Messkörper und/oder Nuklidaktivierungs-Targets im Bereich von 50% bis 99%, insbesondere im Bereich von 70% bis 95%, bevorzugt im Bereich von 80% bis 95% des Durchmessers des Leitungssystems und/oder des Instrumentationsfingers. Der Durchmesser der Messkörper und/oder Nuklidaktivierungs-Targets beträgt gemäss einer vorteilhaften Ausgestaltung der Erfindung zwischen einem 1 mm und 3 mm, insbesondere zwischen 1.2 mm und 2mm, bevorzugt 1.5 mm und 1.7 mm.

Zum Betreiben der Vorrichtung werden der Messzweig und der Reaktorzweig über ihre jeweilige endseitige Kupplung an eine Messvorrichtung bzw. an einen Instrumentationsfinger des Kernreaktors angekuppelt. Die Ankopplung des Reaktorzweigs an den Instrumentationsfinger des Reaktors kann insbesondere im Bereich einer sogenannten Kabelbrücke oberhalb des Reaktorbehälters erfolgen. Im Endbereich vor der Kupplung kann der Reaktorzweig ferner eine Blockiereinrichtung, beispielsweise einen magnetisch betätigbaren, insbesondere in den Reaktorzweig ein- und ausführbaren Anschlag, etwa einen Pin, Stift oder Bolzen, zum Blockieren des Transportweges durch den Reaktorzweig aufweisen. Die Kupplungen sind bevorzugt zum gasdichten Ankoppeln an die Messvorrichtung bzw. an den Instrumentationsfinger ausgebildet, um im Falle einer pneumatischen Transporteinrichtung einen sicheren Transport der Targets und Messkörper mittels Transportgas zu gewährleisten.

Denkbar ist auch, dass sich der Reaktorzweig verästelt, insbesondere kaskadenartig verästelt, um so mehrere oder alle Instrumentationsfinger eines Kernreaktors über je einen Ast des Reaktorzweigs mit der erfindungsgemässen Vorrichtung zu verbinden. Dies erlaubt es insbesondere, mehrere oder alle Instrumentationsfinger eines Kernreaktors mit nur einer erfindungsgemässen Vorrichtung zu betreiben bzw. zu nutzen. Jeder Ast des Reaktorzweigs kann dabei endseitig eine Kupplung zum Ankoppeln des jeweiligen Asts an einen Instrumentationsfinger des Reaktors aufweisen. An den Verästelungen des Reaktorzweigs kann die Vorrichtung Verteilerventile aufweisen zum wahlweisen Verbinden der von einer Verästelung in Richtung Instrumentationsfinger abgehenden Äste des Reaktorzweigs mit der Mehrwege-Armatur bzw. mit einem mehrwege-armaturseitigen Abschnitt des Reaktorzweigs.

Die endseitigen Kupplungen des Reaktorzweigs, des Messzweigs und - wie nachfolgend beschrieben - gegebenenfalls eines Entnahmezweigs und eines Einführzweigs sind bevorzugt an den freien Enden der jeweiligen Zweige angeordnet, d.h. entgegengesetzt zu jenen Enden der Zweige, die in die Mehrwege-Armatur münden.

Wie der Reaktorzweig und der Messzweig kann auch der Entnahmezweig eine endseitige Kupplung zum Ankoppeln, insbesondere gasdichten Ankoppeln an einen Entnahmebehälter für bestrahlte Targets aufweisen. Für die Entnahme der bestrahlten Targets kann der Entnahmezweig entsprechend über seine endseitige Kupplung an einen Entnahmebehälter angekuppelt werden. Alternativ kann die Entnahme der Targets auch ohne direkte Ankopplung des Entnahmezweigs an einen Entnahmebehälter erfolgen. Insbesondere kann der Transfer der Targets aus dem Entnahmezweig in einen Entnahmebehälter ausschliesslich gravitationsgetrieben, insbesondere ohne Transportgas erfolgen. Bevorzugt weist die Vorrichtung im Entnahmezweig, insbesondere im Bereich des freien Endes des Entnahmezweigs eine Absperr-Armatur zum gasdichten Absperren des Entnahmezweigs gegenüber der Umgebung auf. Hierdurch wird in vorteilhafter Weise das Kontaminationsrisiko minimiert.

Zudem kann die Vorrichtung gemäss einer vorteilhaften Ausgestaltung der Erfindung einen Einführzweig mit einer endseitigen Kupplung zum Ankoppeln, insbesondere gasdichten Ankoppeln an eine Einführeinrichtung aufweisen, die zum Einführen von unbestrahlten Targets in das Leitungssystem ausgebildet ist. Die Einführeinrichtung kann beispielsweise ein Behälter, etwa eine Kartusche, oder ein Trichter sein, in dem sich unbestrahlte Targets befinden. Die Einführeinrichtung weist bevorzugt einen Auslass zum Einführen der Targets in den Einführzweig auf, an den die endseitige Kupplung des Einführzweigs ankoppelbar ist. Das Einführen der Targets in den Einführzweig kann (ausschliesslich) gravitationsgetrieben, mittels Transportgas oder mittels mechanischer Transportmittel erfolgen.

Der Einführzweig kann an einer beliebigen Stelle in das Leitungssystem münden, insbesondere in einen Knotenpunkt des Leitungssystems. Bevorzugt mündet der Einführzweig in die Mehrwege-Armatur. In dieser Konfiguration ist die Mehrwege-Armatur vorzugsweise zusätzlich dazu ausgebildet ist, in einer fünften Schaltstellung den Einführzweig mit dem Reaktorzweig oder mit dem Speicherzweig strömungsmässig zu verbinden. Verbindet die Mehrwege-Armatur den Einführzweig mit dem Reaktorzweig, können die unbestrahlten Targets unmittelbar aus der Einführeinrichtung über den Einführzweig, die Mehrwege-Armatur und den Reaktorzweig in den Instrumentationsfinger eingeführt werden. Dadurch wird das Befüllen besonders effektiv. Umgekehrt kann die Mehrwege-Armatur technisch einfacher zu realisieren sein, wenn sie dazu ausgebildet ist, den Einführzweig mit dem Speicherzweig strömungsmässig zu verbinden. Wie im Entnahmezweig weist die Vorrichtung auch im Einführzweig, insbesondere im Bereich des freien Endes des Einführzweigs eine Absperr-Armatur zum gasdichten Absperren des Einführzweigs gegenüber der Umgebung auf. Hierdurch wird in vorteilhafter Weise das Kontaminationsrisiko minimiert.

Gemäss einer besonders vorteilhaften Ausgestaltung der Erfindung kann der Entnahmezweig auch als Einführzeig dienen. In dieser Konfiguration kann der Entnahmezweig dazu ausgebildet sein, wahlweise mit einer Einführeinrichtung oder einem Entnahmebehälter gekoppelt zu werden, um entweder unbestrahlte Targets in das Leitungssystem einzuführen oder bestrahlte Targets aus dem Leitungssystem in einen Entnahmebehälter zu transferieren. Dies ist sowohl dann möglich, wenn der Entnahmezweig endseitig an den Speicherzweig anschliesst, als auch dann, wenn der Entnahmezweig als separater Zweig unmittelbar in die Mehrwege-Armatur oder einen anderen Knotenpunkt des Leitungssystems mündet.

Gemäss einer weiteren vorteilhaften Ausgestaltung kann auch der Speicherzweig als Einführzweig und/oder Entnahmezweig dienen. Insbesondere kann der Speicherzweig dazu ausgebildet sein, mit einer Einführeinrichtung oder wahlweise mit einer Einführeinrichtung und einem Entnahmebehälter gekoppelt zu werden, um entweder unbestrahlte Targets in das Leitungssystem einzuführen oder bestrahlte Targets aus dem Leitungssystem in einen Entnahmebehälter zu transferieren. Hierzu kann der Speicherzweig einseitig eine entsprechend ausgebildete Kupplung aufweisen. Beispielsweise kann der Speicherzweig zum Einführen von unbestrahlten Targets oder Entnehmen von bestrahlten Targets an seinem der Mehrwege-Armatur abgewandten Ende eine endseitige Kupplung zum Ankoppeln, insbesondere wahlweisen Ankoppeln an eine Einführeinrichtung und/oder eine Entnahmeeinrichtung aufweisen. Die Einführeinrichtung und die Entnahmeeinrichtung können insbesondere zusammen durch eine kombinierte Einführ-Entnahme-Einrichtung realisiert sein. Die Einführeinrichtung und/oder die Entnahmeeinrichtung oder die kombinierte Einführ-Entnahme-Einrichtung können einen Transferbehälter, insbesondere einen abschirmenden Transferbehälter aufweisen. Im Endbereich vor der Kupplung kann der Speicherzweig ferner eine Blockiereinrichtung, beispielsweise einen magnetisch betätigbaren, insbesondere in den Speicherzweig ein- und ausführbaren Anschlag, etwa einen Pin, Stift oder Bolzen, zum Blockieren des Transportweges durch den Speicherzweig aufweisen.

Gemäss einer vorteilhaften Ausgestaltung der Erfindung weist die Vorrichtung wenigstens entlang eines Abschnitts des Speicherzweigs eine Abschirmung gegen ionisierende Strahlung auf. Hierdurch wird die Strahlensicherheit erhöht. Vorzugsweise ist die Abschirmung eine Blei-Abschirmung. Besonders bevorzugt entspricht die Länge der Abschirmung entlang des Speicherzweigs bzw. der abgeschirmte Abschnitt des Speicherzweigs wenigstens der Länge des Instrumentationsfingers, so dass die entsprechend der Länge des Instrumentationsfingers maximal mögliche Länge der Target-Kette unter abgeschirmten Bedingungen im Speicherzweig zwischengeparkt werden kann. Gemäss einer vorteilhaften Ausgestaltung beträgt die Länge des abgeschirmten Abschnitts des Speicherzweigs wenigstens 2 m, insbesondere wenigstens 4 m, vorzugsweise wenigstens 5 m. Bevorzugt ist der abgeschirmte Abschnitt des Speicherzweigs im Wesentlichen geradlinig, insbesondere im Wesentlichen horizontal ausgerichtet. Alternativ kann der abgeschirmte Abschnitt spiralförmig ausgebildet sein, wodurch sich eine besonders platzsparende Ausgestaltung ergibt.

Gemäss einer weiteren vorteilhaften Ausgestaltung der Erfindung kann die Mehrwege-Armatur ferner dazu ausgebildet sein, in einer vierten Schaltstellung den Speicherzweig mit dem Messtischzweig strömungsmässig zu verbinden. Hierdurch können die Messkörper in vorteilhafter Weise zu jenen Zeiten, in denen keine Messung durchgeführt wird, im Speicherzweig, vorzugsweise unter abgeschirmten Bedingungen, zwischengeparkt werden. Auf diese Weise wird ebenfalls die Strahlensicherheit der Gesamtvorrichtung erhöht, insbesondere dann, wenn die Abschirmung des Speicherzweigs wirkungsvoller ist als eine etwaige Abschirmung der Messeinrichtung. Zudem werden durch das Zwischenspeichern des Messkörpers die zumeist strahlungsempfindlichen Detektoren in der Messeinrichtung vor übermässiger bzw. unnötiger Strahlungseinwirkung geschützt und damit etwa vor ungewollter Alterung bewahrt.

Denkbar ist auch, dass die Vorrichtung im Messzweig einen Parkierabschnitt zum Zwischenparkieren der Messkörper oder Targets aufweist. Vorzugsweise weist die Vorrichtung wenigstens entlang eines Abschnitts des Messzweigs, insbesondere entlang des Parkierabschnitts eine Abschirmung gegen ionisierende Strahlung auf. Hierdurch wird unter anderem eine alternative Möglichkeit geschaffen, die Messkörper zu jenen Zeiten, in denen keine Messung durchgeführt wird, im Parkierabschnitt des Messzweigs, vorzugsweise unter abgeschirmten Bedingungen, zwischenzuparken. In einem der Mehrwege-Armatur abgewandten Endbereich des Parkierabschnitts und/oder in einem der Mehrwege-Armatur zugewandten Endbereich des Parkierabschnitts kann der Messzweig (jeweils) ferner eine Blockiereinrichtung, beispielsweise einen magnetisch betätigbaren, insbesondere in den Messzweig ein- und ausführbaren Anschlag, etwa einen Pin, Stift oder Bolzen, zum Blockieren des Transportweges durch den Messzweig aufweisen. Alternativ zur Blockiereinrichtung kann der Messzweig in wenigstens einem der genannten Endbereiche des Parkierabschnitts wenigstens einen Haltemagneten aufweisen, beispielsweise wenigstens einen Elektromagneten oder wenigstens einen schaltbaren bzw. schiebbar angeordneten Permanentmagneten. Hierdurch können die vorzugsweise magnetischen Messkörper im Parkierzweig festgehalten werden.

Die zwischen den verschiedenen Zweigen des Leitungssystems durch die Mehrwege-Armatur hergestellten strömungsmässigen Verbindungen werden bevorzugt durch einen oder mehrere Durchgangskanäle in der Mehrwege-Armatur gebildet. Hierzu kann die Mehrwege-Armatur wenigstens ein bewegliches, insbesondere verschiebbares oder drehbares Stellelement aufweisen, durch das sich der eine oder die mehreren Durchgangskanäle erstrecken. In den verschiedenen Schaltstellungen verbinden die eine oder die mehreren Durchgangskanäle entsprechende Anschlussstellen der Mehrwege-Armatur, an denen die Zweige des Leitungssystems in die Mehrwege-Armatur münden. Die Mehrwege-Armatur kann insbesondere ein Armaturengehäuse aufweisen, das die Anschlussstellen aufweist und in dem das wenigstens eine bewegliche, insbesondere verschiebbare oder drehbare Stellelement aufgenommen, insbesondere gelagert ist. Ferner kann die Mehrwege-Armatur einen Aktuator, beispielsweise einen Stellmotor aufweisen, mittels dem das bewegliche, insbesondere verschiebbare oder drehbare Stellelement in die verschiedenen Schaltstellungen bringbar ist.

Gemäss einer vorteilhaften Ausgestaltung der Erfindung ist die Mehrwege-Armatur als Mehrwege-Ventil, insbesondere als (Mehrwege-) Drehventil bzw. (Mehrwege-) Rotationsstellventil oder (Mehrwege-) Schiebeventil ausgebildet. Beispielsweise kann die Mehrwege-Armatur als (Mehrwege-) Kugelhahnventil oder (Mehrwege-) Kükenventil ausgebildet sein.

Als Drehventil kann die Mehrwege-Armatur beispielsweise ein Stellelement aufweisen, das in einem Armaturengehäuse drehbar dichtend gelagert ist. Das Armaturengehäuse weist wenigstens drei, insbesondere wenigstens vier, bevorzugt wenigstens fünf, besonders bevorzugt sechs oder mehr Anschlussstellen auf. Die wenigstens drei, insbesondere wenigstens vier, bevorzugt wenigstens fünf, besonders bevorzugt sechs oder mehr Anschlussstellen sind bezüglich des Armaturengehäuses vorzugsweise umfangsseitig gleichmässig verteilt angeordnet. Die Anzahl der Anschlussstellen ist abhängig vom Durchmesser der Mehrwege-Armatur und kann mit steigendem Durchmesser erhöht werden. Über die wenigstens drei, insbesondere wenigstens vier, bevorzugt wenigstens fünf, besonders bevorzugt sechs oder mehr Anschlussstellen münden wenigstens der Reaktorzweig, der Messzweig und der Speicherzweig sowie gegebenenfalls der Entnahmezweig, der Einführzweig und/oder eine Abgasleitung (wie weiter unten beschrieben) in die Mehrwege-Armatur. Das drehbare Stellelement weist wenigstens einen, insbesondere wenigstens zwei, bevorzugt drei oder sogar mehr als drei Durchgangskanäle auf, um in wenigstens der ersten und zweiten Schaltstellung des Stellelements den Reaktorzweig mit dem Messzweig bzw. den Reaktorzweig mit dem Speicherzweig strömungsmässig zu verbinden. Um zusätzlich eine oder mehrere der weiteren hierin beschriebenen Schaltstellungen (dritte, vierte fünfte, sechste und/oder siebte Schaltstellung) zu realisieren, weist das drehbare Stellelement vorzugsweise wenigstens zwei, bevorzugt drei oder mehr als drei Durchgangskanäle auf. In einer technisch besonders einfachen Realisierung ist die Mehrwege-Armatur als 3/2- Wege-Armatur, insbesondere als 3/2-Drehventil ausgebildet. Alternativ kann die Mehrwege-Armatur als 3/3-, 4/3-, 4/4-, 5/4-, 5/5-, 6/5-, 6/6- oder 6/7-Wege-Armatur ausgebildet sein.

Beispielsweise kann die Mehrwege-Armatur als Drehventil mit einem drehbaren Stellelement ausgebildet sein, wobei das drehbare Stellelement wenigstens einen ersten, einen zweiten und einen dritten Durchgangskanal aufweist, die senkrecht zu einer Drehachse des drehbaren Stellelements durch das Stellelement verlaufen. Dabei kann der erste Durchgangskanal geradlinig durch die Drehachse des Stellelements verlaufen, insbesondere um zwei sich um 180° gegenüberliegende Anschlussstellen miteinander zu verbinden. Der zweite Durchgangskanal kann gekrümmt in einem 120°-Bogen symmetrisch versetzt zum ersten Durchgangskanal durch das Stellelement verlaufen, insbesondere um zwei umfangsseitig um 120° versetzt zueinander angeordnete Anschlussstellen miteinander zu verbinden. Der dritte Durchgangskanal kann gleich wie der zweite Durchgangskanal ausgebildet sein und bezüglich des ersten Durchgangskanal spiegelsymmetrisch zum zweiten Durchgangskanal durch das Stellelement verlaufen. Alternativ kann der dritte Durchgangskanal sekantenartig, insbesondere geradlinig oder gekrümmt, durch das Stellelement verlaufen, insbesondere asymmetrisch versetzt zum ersten Durchgangskanal gegenüberliegend dem zweiten Durchgangskanal, um zwei umfangsseitig um 60° versetzt zueinander angeordnete Anschlussstellen miteinander zu verbinden. Bevorzugt dient ein solcher Durchgangskanal lediglich zur fluidischen Verbindung von zwei Anschlussstellen, insbesondere zum Verbinden des Reaktorzweigs mit einer Abgasleitung (wie weiter unten beschrieben). Denkbar ist auch, dass das zuvor beispielhaft beschriebene Drehventil keinen dritten Durchgangskanal aufweist, sondern nur den geradlinigen ersten Durchgangskanal und den in einem 120°-Bogen gekrümmt verlaufenden zweiten Durchgangskanal. Gemäss einem anderen Beispiel kann die als Drehventil ausgebildete Mehrwege-Armatur ein Stellelement mit wenigstens einem, insbesondere genau einem Durchgangskanal aufweisen, der gekrümmt in einem 90°- oder 120°-Bogen durch das Stellelement verläuft, insbesondere um zwei umfangsseitig um 90° oder 120° versetzt zueinander angeordnete Anschlussstellen miteinander zu verbinden. Denkbar ist auch, dass die Mehrwege-Armatur als Drehventil mit einem Armaturengehäuse und einem drehbaren Stellelement ausgebildet ist, wobei das Armaturengehäuse wenigstens sechs, insbesondere genau sechs Anschlussstellen aufweist und das drehbare Stellelement wenigstens einen ersten und einen zweiten Durchgangskanal aufweist, die jeweils in einem 120°-Bogen gekrümmt verlaufen und spiegelsymmetrisch zueinander angeordnet sind. Diese Ausführungsform kann insbesondere dazu verwendet werden, mit einer Mehrwege-Armatur zwei Instrumentationsfinger zu bedienen. Hierzu können in die Mehrwege-Armatur, vorzugsweise in jeweils gegenüberliegende Anschlussstellen, jeweils zwei Reaktorzweige, zwei Speicherzweige und zwei Messzweige münden, wobei jeweils ein Reaktorzweig, ein Speicherzweig und ein Messzweig einem der Instrumentationsfinger zugeordnet sind. In verschiedenen Schaltstellungen verbindet die Mehrwege-Armatur jeweils einen Reaktorzweig mit einem zugeordneten Speicherzweig oder einem zugeordneten Messzweig. Der jeweils einem der Instrumentationsfinger zugeordnete Reaktorzweig, Messzweig und Speicherzweig bilden insoweit ein Sub-Leitungssystem. Die Mehrwege-Armatur weist gemäss einer vorteilhaften Ausgestaltung der Erfindung wenigstens einen Aktuator, insbesondere einen pneumatischen oder elektrischen Aktuator, beispielsweise einen Stellmotor, zum Betätigen des wenigstens einen beweglichen Stellelements auf. Besonders bevorzugt kann der Aktuator zum gleichzeitigen Betätigen mehrere Mehrwege-Armaturen ausgebildet sein, etwa dann wenn mehrere Instrumentationsfinger eines Kernreaktors mit jeweils einer erfindungsgemässen Vorrichtung ausgestattet bzw. betrieben werden. Beispielsweise können mehrere, etwa drei als Drehventile ausgebildete Mehrwege-Armaturen mit einer gemeinsamen Drehachse wirkverbunden sein, die von einem gemeinsamen Aktuator angetrieben wird.

Insbesondere können die drehbaren Stellelemente mehrerer als Drehventile ausgebildeter Mehrwege-Armaturen auf einer gemeinsamen Drehachse angeordnet sein.

Gemäss der Erfindung kann die Transporteinrichtung als pneumatische oder als mechanische Transporteinrichtung ausgebildet sein. Bei einer pneumatischen Transporteinrichtung dient Transportgas, beispielsweise Druckluft oder Stickstoff, als Transportmittel zum Fördern der Targets durch das Leitungssystem, in und aus dem Instrumentationsfinger und vorzugsweise in und aus einer Messeinrichtung und/oder einer Einführeinrichtung sowie optional in einen Entnahmebehälter. Bei einer mechanischen Transporteinrichtung dient ein mechanisches Fördermittel, beispielsweise ein oder mehrere flexible druckübertragende Elemente, beispielsweise Kabel, Drähte, Ketten oder dergleichen, zum mechanischen Schieben der Targets und Messkörper durch das Leitungssystem, in und aus dem Instrumentationsfinger und vorzugsweise in und aus einer Messeinrichtung und/oder einer Einführeinrichtung sowie optional in einen Entnahmebehälter. Denkbar ist auch eine mechanische Fördereinrichtung wie aus EP 2093773 A2 bekannt.

Bevorzugt ist die Transporteinrichtung als pneumatische Transporteinrichtung ausgebildet. Gemäss einer vorteilhaften Ausgestaltung der Erfindung weist die pneumatische Transproteinrichtung eine erste Transportgasleitung auf, die zum pneumatischen Transportieren der Messkörper und Targets aus dem Speicherzweig in Richtung Mehrwege-Armatur endseitig an den Speicherzweig angekoppelt ist. Ferner kann die pneumatische Transporteinrichtung eine zweite Transportgasleitung aufweisen, die zum pneumatischen Transportieren der Messkörper und Targets aus dem Instrumentationsfinger über den Reaktorzweig in Richtung Mehrwege-Armatur mit dem Instrumentationsfinger koppelbar ist. Zusätzlich kann die pneumatische Transporteinrichtung eine dritte Transportgasleitung umfassen, die zum pneumatischen Transportieren der Messkörper und Targets aus der Messvorrichtung über den Messzweig in Richtung Mehrwege-Armatur mit der Messvorrichtung koppelbar ist. Zum pneumatischen Transportieren der Targets aus der Einführeinrichtung in das Leitungssystem, insbesondere in einen Einführzweig, kann die pneumatische Transporteinrichtung zudem eine vierte Transportgasleitung umfassen, die zu diesem Zweck mit der Einführeinrichtung koppelbar ist.

Die verschiedenen Transportgasleitungen können alle mit einer gemeinsamen Transportgasquelle verbunden sein. Als Transportgas kommen insbesondere Druckluft oder Stickstoff in Betracht. Bevorzugt ist die pneumatische Transporteinrichtung dazu ausgebildet, das Transportgas mit einem Druck im Bereich von wenigstens 5 bar, insbesondere wenigstens 8 bar, bevorzugt wenigstens 10 bar bereitzustellen und/oder durch die Transportgasleitungen und das Leitungssystem zu fördern.

Zum Druckabbau im Leitungssystem, insbesondere zum Abführen von Transportgas aus dem Speicherzweig, aus dem Reaktorzweig und/oder aus dem Messzweig, weist die Vorrichtung gemäss einer weiteren vorteilhaften Ausgestaltung der Erfindung eine Abgaseinrichtung auf. Vorzugsweise kann die Abgaseinrichtung je wenigstens eine Abgasleitung aufweisen, die endseitig in den Speicherzweig, den Messzweig und/oder den Reaktorzweig mündet. Alternativ oder zusätzlich kann die Abgaseinrichtung je wenigstens eine Abgasleitung aufweisen, die mit dem Instrumentationsfinger und/oder der Messeinrichtung koppelbar ist, um beim Transferieren von Targets oder Messkörpern in den Instrumentationsfinger bzw. in die Messeinrichtung Transportgas abzuführen. Zum Öffnen und Schliessen können in einer oder mehreren der Abgasleitungen je wenigstens ein Absperrventil vorgesehen sein.

Die jeweiligen Abgasleitungen können in die erste, zweite, dritte bzw. vierte Transportgasleitung münden, so dass ein Teil der jeweiligen Transportgasleitungen bidirektional sowohl zum Zuführen als auch zum Abführen von Transportgas verwendet werden.

Ferner kann es vorgesehen sein, dass die Abgaseinrichtung eine in die Mehrwege-Armatur mündende Abgasleitung aufweist. In dieser Ausgestaltung der Erfindung kann die Mehrwege-Armatur ferner dazu ausgebildet sein, in einer sechsten Schaltstellung den Reaktorzweig mit der in die Mehrwege-Armatur mündenden Abgasleitung strömungsmässig zu verbinden. Die in die Mehrwege-Armatur mündende Abgasleitung dient in vorteilhafter Weise dazu, Transportgas aus dem Reaktorzweig abzuführen, wenn dieser mit keinem anderen Zweig des Leitungssystems strömungsverbunden ist.

Denkbar ist ferner, dass wenigstens zwei Abgasleitungen, vorzugsweise über ein Mehrwege-Ventil in eine gemeinsame Abgasleitung zusammengeführt sind. Dadurch ergibt sich eine kompakte Bauweise der Abgaseinrichtung. So können etwa jeweils mehrere in die zweite bzw. dritte Transportgasleitung mündende Abgasleitungen über ein 3/2- oder 3/3-Wege-Ventil in eine gemeinsame Abgasleitung zusammengeführt werden. In gleicher Weise können eine in die erste Transportgasleitung über ein 3/2-Wege-Ventil einkoppelte Abgasleitung zum Abführen von Transportgas aus dem Speicherzweig und eine in die Mehrwege-Armatur mündende Abgasleitung in eine gemeinsame Abgasleitung zusammengefasst werden.

Stromabwärts enden die eine oder mehreren Abgasleitungen bzw. gemeinsamen Abgasleitungen bevorzugt in einem Abgasfilter, um etwaige Kontaminationen aus dem durch den Reaktorkern geführten Transportgas herauszufiltern.

Vorzugsweise haben die Transportgasleitungen und Abgasleitungen einen kleineren Durchmesser als die Zweige des Leitungssystems bzw. als die Targets und Messkörper. Hierdurch kann in technisch einfacher Weise verhindert werden, dass Targets und/oder Messkörper versehentlich in die Transportgasleitungen und/oder Abgasleitungen gelangen. Bevorzugt haben die Transportgasleitungen und Abgasleitungen einen Durchmesser von höchstens 1.5 mm. Alternativ können die Transportgasleitungen und Abgasleitungen eine lokale Verjüngung aufweisen, die einen kleineren Durchmesser als die Zweige des Leitungssystems bzw. als die Targets und Messkörper aufweist. Denkbar ist auch, dass in den Transportgasleitungen und Abgasleitungen fluidpermeable Rückhalteelemente, beispielsweise Siebe, Gitter oder Netze zum Zurückhalten von Targets und Messkörpern angeordnet sind.

Gemäss einer weiteren vorteilhaften Ausgestaltung der Erfindung kann die Mehrwege-Armatur ferner dazu ausgebildet sein, in einer siebten Schaltstellung alle Zweige des Leitungssystems voneinander strömungsmässig zu entkoppeln, d.h. alle Zweige für den Transport von Targets und/oder Messkörpern zu sperren. Diese Schaltposition erhöht in vorteilhafter Weise ebenfalls die Betriebssicherheit der Vorrichtung.

Nach einer weiteren vorteilhaften Ausgestaltung der Erfindung ist die Vorrichtung zum drucklosen Entnehmen der Targets aus dem Leitungssystem in einen Entnahmebehälter (ohne pneumatisches Fördern mittels Transportgas) ausgebildet. Hierzu kann es vorgesehen sein, dass der Entnahmezweig in vertikaler Richtung unterhalb der Mehrwege-Armatur angeordnet und vorzugsweise monoton fallend ausgebildet ist, so dass die Targets ausschliesslich gravitationsgetrieben über die Mehrwege-Armatur durch den Entnahmezweig in einen Entnahmebehälter transferiert werden können. Für die drucklose, ausschliesslich gravitationsgetriebene Entnahme von Targets weist der Reaktorzweig - wie weiter unten beschrieben - bevorzugt einen monoton fallenden Übergabeabschnitt auf, der unmittelbar in die Mehrwege-Armatur mündet. Durch das drucklose Entnehmen kann zudem auf eine Transportgasabführung im Bereich des Entnahmezweigs bzw. Entnahmebehälters verzichtet werden, was einerseits den technischen Aufwand und andererseits das Kontaminationsrisiko reduziert.

Der Reaktorzweig weist gemäss einer weiteren vorteilhaften Ausgestaltung der Erfindung einen, insbesondere monoton fallenden Übergabeabschnitt auf. Bevorzugt mündet der Übergabeabschnitt unmittelbar in die Mehrwege-Armatur. Der Übergabeabschnitt kann dazu genutzt werden, Nuklidaktivierungstargets von sogenannten Dummy-Targets oder verschiedenartige Targets einer Aktivierungscharge voneinander zu separieren. Dummy-Targets sind Target-Körper, die als Platzhalter zusammen mit den zu bestrahlenden Nuklidaktivierungs-Targets in den Instrumentationsfinger eingeführt werden, um die zu bestrahlenden Targets entsprechend der Leistungsdichteverteilung im Reaktor zum Zwecke einer optimalen Aktivierung lagerichtig entlang des Instrumentationsfingers zu positionieren. Zum Entnehmen der bestrahlten Targets kann eine über den Reaktorzweig ausgeführte Kette aus Targets und Dummy-Targets bzw. eine Kette, die wenigstens zwei Target-Typen umfasst, im Übergabeabschnitt zwecks Separierung zwischengehalten werden. Bevorzugt weist die Vorrichtung an dem der Mehrwege-Armatur zugewandten Ende des Übergabeabschnitts eine Blockiereinrichtung, etwa einen schaltbaren Magnetanschlag auf, um Targets, Messkörper und/oder Dummy-Targets in Richtung Mehrwege-Armatur zurückzuhalten. Die Blockiereinrichtung kann auch durch die Mehrwege-Armatur selbst realisiert sein.

Gemäss einer besonders vorteilhaften Ausgestaltung der Erfindung kann das Separieren der Dummy-Targets von den eigentlichen Targets bzw. Separieren verschiedener Target-Typen magnetisch erfolgen. Hierzu weisen die Targets oder Dummys bzw. wenigstens ein Target-Typ ein magnetisches Material auf. Entsprechend kann die Vorrichtung entlang des Übergabeabschnitts wenigstens einen Haltemagneten aufweisen, beispielsweise wenigstens einen Elektromagneten oder wenigstens einen schaltbaren bzw. schiebbar angeordneten Permanentmagneten. Auf diese Weise lassen sich durch das Aktivieren des wenigstens einen Elektromagneten die jeweils magnetischen Target-Körper einer im Übergabeabschnitt zwischengeparkten Target-Kette festhalten, während die jeweils nichtmagnetischen Target-Körper der Target-Kette in einen anderen Bereich des Leitungssystems oder aus dem Leitungssystem transferiert werden können.

Insbesondere zur Entnahme einer abseparierten oder abzuseparierenden (Teil-) Menge von Dummy-Targets, Targets oder Messkörpern kann die Vorrichtung nach einer weiteren vorteilhaften Ausgestaltung der Erfindung im Reaktorzweig eine Zwischenentnahme-Einrichtung aufweisen. Diese umfasst bevorzugt eine Zwischenentnahme-Armatur im Reaktorzweig, in die ein reaktorseitiger Abschnitt des Reaktorzweigs, ein sich in Richtung Mehrwege-Armatur erstreckender Zwischenentnahme-Abschnitt des Reaktorzweigs, eine Abgasleitung und ein Zwischenentnahme-Zweig münden, welcher einen zusätzlichen Zweig des Leitungssystems bildet. Die Zwischenentnahme-Armatur ist dazu ausgebildet, in einer ersten Schaltstellung den reaktorseitigen Abschnitt mit dem Zwischenentnahme-Abschnitt des Reaktorzweigs, in einer zweiten Schaltstellung den Zwischenentnahme-Abschnitt des Reaktorzweigs mit dem Zwischenentnahme-Zweig und in einer dritten Schaltstellung zwecks Druckabbau den Zwischenentnahme-Abschnitt mit der Abgasleitung strömungsmässig zu verbinden. Vorzugsweise ist die Zwischenentnahme-Armatur ferner dazu ausgebildet, in einer vierten Schaltstellung wenigstens den Zwischenentnahme-Abschnitt abzuriegeln, vorzugsweise auch den Zwischenentnahme-Zweig und/oder den reaktorseitigen Abschnitt.

Zum Abseparieren einer (Teil-) Menge von Dummy-Targets, Targets oder Messkörpern kann der Zwischenentnahme-Abschnitt im Übergang zwischen einem ersten und einem zweiten monoton fallenden Teilabschnitt des Zwischenentnahme-Abschnitts einen Apex aufweisen, wobei der erste Teilabschnitt in die Zwischenentnahme-Armatur mündet. Bevorzugt entspricht die Länge des ersten Teilabschnitts der Kettenlänge der abzuseparierenden (Teil-) Menge von Dummy-Targets, Targets oder Messkörpern. Durch Transferieren der gesamten Target-Kette in den Zwischenentnahme-Abschnitt bis zum Anschlagen an die (abriegelnde) Zwischenentnahme-Armatur sammeln sich auf diese Weise die abzuseparierende bzw. zu entnehmende (Teil-) Menge von Dummy-Targets, Targets oder Messkörpern im ersten Teilabschnitt, während sich die nicht zu entnehmende (Teil-) Menge jenseits des Apex im zweiten Teilabschnitt befindet. Durch Schalten der Zwischenentnahme-Armatur in die zweite Schaltstellung kann dann die abzuseparierende bzw. zu entnehmende (Teil-) Menge von Dummy-Targets, Targets oder Messkörpern ausschliesslich gravitationsgetrieben in den Zwischenentnahme-Zweig überführt werden, während die nicht zu entnehmende (Teil-) Menge im zweiten Teilabschnitt des Zwischenentnahme-Abschnitts verbleibt. Bevorzugt ist hierzu der Zwischenentnahme-Zweig in vertikaler Richtung unterhalb der Zwischenentnahme-Armatur angeordnet und vorzugsweise zudem wenigstens entlang eines von der Zwischenentnahme-Armatur ausgehenden Abschnitts monoton fallend ausgebildet.

Die zuvor beschriebene Zwischenentnahme-Einrichtung erlaubt es in vorteilhafter Weise, auf Dummy-Targets zum Zwecke der Target-Positionierung im Instrumentationsfinger zu verzichten. Stattdessen kann der Instrumentationsfinger mittels der erfindungsgemässen Vorrichtung über seine gesamte Länge mit Nuklidaktivierungs-Targets befüllt werden. Targets, die aufgrund ihrer insbesondere endseitigen Position im Instrumentationsfinger unzureichend aktiviert wurden, können mittels der zuvor beschriebenen Zwischenentnahme-Einrichtung von ausreichend aktivierten Targets absepariert und separat entnommen werden, um sie zwecks vollständiger Aktivierung erneut in den Instrumentationsfinger einzuführen (vorzugsweise an eine andere Position im Instrumentationsfinger mit höherer Leistungsdichte). Hierzu können die teilaktivierten Targets beispielsweise über den Zwischenentnahme-Zweig in einen Aufnahmebehälter transferiert werden, welcher wiederum zum erneuten Einführen in den Instrumentationsfinger an einen Einführzweig des Leitungssystems gekoppelt werden kann. Alternativ kann der Zwischenentnahme-Zweig auch leitungsmässig mit dem Einführzweig verbunden sein.

Sofern - wie oben beschreiben - eine Entnahme der Targets über den als Entnahmezweig und gegebenenfalls auch als Einführzweig dienenden Speicherzweig erfolgt, kann die Vorrichtung in einem Abschnitt des Speicherzweigs, insbesondere in dem abgeschirmten Abschnitt des Speicherzweigs wenigstens einen Haltemagneten aufweisen, beispielsweise wenigstens einen Elektromagneten oder wenigstens einen schaltbaren bzw. schiebbar angeordneten Permanentmagneten. Auf diese Weise kann ein Separieren allfällig verwendeter Dummy-Targets von den eigentlichen Targets bzw. ein Separieren verschiedener Target-Typen magnetisch erfolgen.

Nach einer weiteren vorteilhaften Ausgestaltung der Erfindung weist die Vorrichtung im Reaktorzweig ein Absperrventil, insbesondere ein Notschliessventil, zum gasdichten Absperren des Reaktorzweigs auf. In vorteilhafter Weise dient das Absperrventil im Falle einer reaktorseitigen Leckage in das Leitungssystem zum sofortigen Abriegeln der übrigen Teile des Leitungssystems, die den reaktorabgewandten, jenseits des Absperrventils gelegenen Bereichen der Vorrichtung zugordnet sind. Insbesondere können hierdurch Bereiche außerhalb des Reaktors sicher von dem Bereich im Inneren des Reaktors abgetrennt werden, so dass eine Kontamination des Bereichs außerhalb des Reaktors durch Siedewasser, Dampf oder dergleichen aus dem Reaktor vermieden werden kann. Das Absperrventil schafft insoweit eine physische Grenze zwischen unterschiedlichen betrieblichen Sicherheitsklassen, so dass die jenseits des Absperrventils gelegenen Teile der Vorrichtung in eine niedrigere Sicherheitsklasse eingestuft werden können. Durch das Absperrventil kann daher nicht nur die Betriebssicherheit erhöht, sondern auch der sicherheitstechnische Aufwand für einen Grossteil der Vorrichtung deutlich reduziert werden.

Zur Detektion von etwaigen Leckagen kann die Vorrichtung ferner wenigstens einen Feuchtesensor und/oder wenigstens einen Drucksensor aufweisen. Vorzugsweise ist der wenigstens eine Feuchtesensor und/oder der wenigstens eine Drucksensor in einer Abgasleitung der Vorrichtung angeordnet.

Nach einer weiteren vorteilhaften Ausgestaltung der Erfindung ist die Vorrichtung zum wahlweisen Transferieren von Nuklidaktivierungs-Targets und Messkörpern in bzw. aus mehreren Instrumentationsfingern ausgebildet. Hierzu kann das Leitungssystem der Vorrichtung für jeden Instrumentationsfinger jeweils wenigstens einen Reaktorzweig, einen Speicherzweig und einen Messzweig sowie optional einen Entnahmezweig und/oder optional einen Einführzweig aufweisen. Die jeweils einem Instrumentationsfinger zugeordneten Zweige bilden vorzugsweise ein Sub-Leitungssystem.

Alle zuvor im Hinblick auf die Verwendung eines Instrumentationsfingers beschriebenen Vorteile, Merkmale und besonderen Ausführungsformen des Leitungssystems sind entsprechend auf die jeweils einem Instrumentationsfinger zugeordneten Zweige übertragbar.

Die jeweils einem Instrumentationsfinger zugeordneten Zweige können in einer der zuvor beschriebenen Varianten in eine Mehrwege-Armatur münden. Für jedes Sub-Leitungssystem kann insbesondere genau eine Mehrwege-Armatur der zuvor beschriebenen Art vorgesehen sein.

Denkbar ist aber auch, dass die Vorrichtung wenigstens eine Mehrwege-Armatur aufweist, in die die Zweige von wenigstens zwei, insbesondere genau zwei Sub-Leitungssystemen münden und die jeweils die Zweige eines der Sub-Leitungssysteme in der zuvor beschriebenen Art miteinander verbindet. Hierdurch wird in vorteilhafter Weise Bauraum für die Transportvorrichtung eingespart. Beispielsweise kann die Mehrwege-Armatur als Drehventil mit einem Armaturengehäuse und einem drehbaren Stellelement ausgebildet sein, wobei das Armaturengehäuse wenigstens sechs, insbesondere genau sechs Anschlussstellen aufweist und das drehbare Stellelement wenigstens einen ersten und einen zweiten, insbesondere ausschliesslich einen ersten und einen zweiten Durchgangskanal aufweist, die jeweils in einem 120°-Bogen gekrümmt verlaufen und spiegelsymmetrisch zueinander angeordnet sind. In eine derartige Mehrwege-Armatur können jeweils zwei Reaktorzweige, zwei Speicherzweige und zwei Messzweige münden, wobei jeweils ein Reaktorzweig, ein Speicherzweig und ein Messzweig einem der Instrumentationsfinger zugeordnet sind und ein Sub-Leitungssystem bilden. In verschiedenen Schaltstellungen verbindet die Mehrwege-Armatur jeweils einen Reaktorzweig wahlweise mit einem zugeordneten Speicherzweig oder einem zugeordneten Messzweig.

Denkbar ist auch, dass die Vorrichtung zum Bedienen mehrerer Instrumentationsfinger einen Mehrwege-Armaturenblock aufweist, der mehrere, insbesondere wenigstens zwei oder drei, vorzugsweise genau zwei oder genau drei Mehrwege-Armaturen gemäss der vorliegenden Erfindung aufweist, die jeweils zur Realisierung verschiedener Schaltstellungen ausgebildet sind. Der Mehrwege-Armaturenblock kann insbesondere mehrere Armaturengehäuse und mehrere bewegliche, insbesondere verschiebbare oder drehbare Stellelemente aufweisen, die jeweils in einem der Armaturengehäuse aufgenommen, insbesondere gelagert sind und die einen oder mehrere Durchgangskanäle aufweisen. Ein Armaturengehäuse und ein darin aufgenommenes Stellelement realisieren jeweils eine Mehrwege-Armatur. Alternativ kann der Mehrwege-Armaturenblock auch ein gemeinsames Armaturengehäuse und mehrere bewegliche, insbesondere verschiebbare oder drehbare Stellelemente aufweisen, die jeweils in dem gemeinsamen Armaturengehäuse aufgenommen, insbesondere gelagert sind und die jeweils einen oder mehrere Durchgangskanäle aufweisen, wobei jedes der mehreren Stellelemente eine Mehrwege-Armatur realisiert.

Vorzugsweise sind in beiden Konfigurationen wenigstens zwei, insbesondere alle Stellelemente derart miteinander verbunden, dass sie gemeinsam, etwa von einem gemeinsamen Aktuator in verschiedene Schaltstellungen bewegbar, insbesondere verschiebbar oder drehbar sind.

Jedes der mehreren Armaturengehäuse bzw. das gemeinsame Armaturengehäuse des Mehrwege-Armaturenblocks kann für jede realisierte Mehrwege-Armatur mehrere Anschlussstellen aufweisen, an denen die Zweige jeweils eines Sub-Leitungssystems in den Mehrwege-Armaturenblock münden. In den verschiedenen Schaltstellungen verbinden die eine oder die mehreren Durchgangskanäle des zugeordneten Stellelements die entsprechenden Anschlussstellen der jeweiligen Mehrwege-Armatur und damit jeweils verschiedene Zweige eines Sub-Leitungssystems,

Die Vorrichtung kann ferner für einen oder mehrere der jeweils einem Instrumentationsfinger zugeordneten Reaktorzweige jeweils eine Zwischenentnahme-Armatur aufweisen, in die entsprechend ein reaktorseitiger Abschnitt des Reaktorzweigs, ein sich in Richtung Mehrwege-Armatur erstreckender Zwischenentnahme-Abschnitt des Reaktorzweigs und ein Zwischenentnahme-Zweig münden.

Zum Transportieren der Messkörper und Targets kann die Vorrichtung für alle Sub-Leitungssysteme jeweils eine separate pneumatische oder mechanische Transporteinrichtung oder vorzugsweise eine gemeinsame pneumatische oder mechanische Transporteinrichtung aufweisen. In beiden Varianten erfolgt das Transportieren der Messkörper und Targets in den jeweiligen Sub-Leitungssystemen vorzugsweise unabhängig voneinander.

Ferner kann die Vorrichtung für alle Sub-Leitungssysteme jeweils ein separates Abgassystem oder ein gemeinsames Abgassystem aufweisen, das über entsprechende Abgasleitungen mit den Sub-Leitungssystemen verbunden ist. In beiden Varianten erfolgt die Abgas-Abführung für die jeweiligen Sub-Leitungssysteme vorzugsweise unabhängig voneinander. Hierzu kann die Abgaseinrichtung für jedes Sub-Leitungssystem ein oder mehrere Gas-Ventile aufweisen.

Die Vorrichtung kann entlang eines jeweiligen Abschnitts der Speicherzweige und/oder eines jeweiligen Abschnitts der Messzweige, insbesondere entlang jeweiliger Parkierabschnitte, eine Abschirmung aufweisen. Die Abschirmung kann für jeden Abschnitt der Speicherzweige und/oder Messzweige separat ausgebildet sein. Vorzugsweise ist eine gemeinsame Abschirmung entlang aller abzuschirmenden Abschnitte der Speicherzweige vorgesehen. In gleicher Weise ist bevorzugt eine gemeinsame Abschirmung entlang aller abzuschirmenden Abschnitte der Messzweige, insbesondere entlang aller Parkierabschnitte vorgesehen.

Ein weiterer Aspekt der Erfindung betrifft ein System zum wahlweisen Durchführen von Nuklidaktivierungen und Messungen mittels Messkörpern in einem Instrumentationsfinger eines Kernreaktors. Das System umfasst eine Vorrichtung zum Transferieren von Nuklidaktivierungs-Targets und Messkörpern gemäss der vorliegenden Erfindung und wie zuvor beschrieben. Das System umfasst ferner eine Messvorrichtung zum Bestimmen einer durch energetisches Anregen im Kernreaktor veränderlichen Eigenschaft der Messkörper, wobei die Messeinrichtung endseitig an den Messzweig der Vorrichtung gekoppelt ist.

Ein weiterer Aspekt der Erfindung betrifft ein Verfahren zum Aktivieren von Nuklidaktivierungs-Targets und optional zum energetischen Anregen von Messkörpern in einem Instrumentationsfinger eines Kernreaktors unter Verwendung einer Vorrichtung zum Transferieren der Nuklidaktivierungs-Targets und Messkörper gemäss der vorliegenden Erfindung und wie zuvor beschrieben. Das Verfahren umfasst die folgenden Schritte:
- Einführen von unbestrahlten Nuklidaktivierungs-Targets in das Leitungssystem der an den Instrumentationsfinger angekoppelten Vorrichtung;
- Transferieren der unbestrahlten Targets über den Reaktorzweig in den Instrumentationsfinger;
- Halten der Targets im Instrumentationsfinger zur Nuklidaktivierung durch Bestrahlen.

Das Einführen von unbestrahlten Targets kann beispielsweise über einen Einführzweig erfolgen, der einen Ends in die Mehrwege-Armatur mündet und anderen Ends an eine Einführeinrichtung angekoppelt ist. Der Transfer der Targets aus dem Einführzweig kann direkt in den Reaktorzweig erfolgen oder alternativ indirekt über den Speicherzweig, wobei die Targets zunächst über die sich in der dritten Schaltstellung befindliche Mehrwege-Armatur in den Speicherzweig und dann - nach Umschalten der Mehrwege-Armatur in die erste Schaltstellung - aus dem Speicherzweig über die Mehrwege-Armatur in den Reaktorzweig und weiter in den Instrumentationsfinger transferiert werden.

Denkbar ist auch, dass das Einführen von unbestrahlten Targets über den Speicherzweig erfolgt. Hierzu kann der Speicherzweig vorzugsweise - wie weiter oben beschrieben - an seinem der Mehrwege-Armatur abgewandten Ende an eine Einführeinrichtung angekoppelt werden, aus der die unbestrahlten Targets im Weiteren über den Speicherzweig, die Mehrwege-Armatur und den Reaktorzweig in den Instrumentationsfinger transferiert werden.

Das Transferieren der Targets in den Instrumentationsfinger erfolgt vorzugsweise pneumatisch mittels Transportgas.

Soll optional eine Messung, etwa eine Kugelmessung zur Bestimmung des Neutronenflusses im Reaktor, erfolgen, so kann das Verfahren ferner die folgenden Schritte umfassen:
- Unterbrechen des Haltens der Targets im Instrumentationsfinger;
- Transferieren der Targets aus dem Instrumentationsfinger über den Reaktorzweig und die Mehrwege-Armatur in den Speicherzweig zum dortigen Zwischenspeichern;
- Transferieren von Messkörpern aus einer an den Messzweig angekoppelten Messeinrichtung oder aus einen Parkabschnitt im Messzweig in den Instrumentationsfinger über den Messzweig, die Mehrwege-Armatur und den Reaktorzweig;
- Halten der Messkörper im Instrumentationsfinger zum energetischen Anregen;
- Transferieren der Messkörper aus dem Instrumentationsfinger über den Reaktorzweig, die Mehrwege-Armatur und den Messzweig in die Messeinrichtung zum Bestimmen einer durch das energetische Anregen im Kernreaktor veränderlichen Eigenschaft der Messkörper;
- Transferieren der Targets aus dem Speicherzweig über die Mehrwege-Armatur und den Reaktorzweig in den Instrumentationsfinger;
- Fortführen des Haltens der Targets im Instrumentationsfinger.

Vor dem Transferieren der Targets aus dem Instrumentationsfinger in den Speicherzweig wird die Mehrwege-Armatur in die erste Schaltstellung gebracht. Nach diesem Transfer und vor dem Transferieren der Messkörper aus der Messeinrichtung in den Instrumentationsfinger wird die Mehrwege-Armatur in die zweite Schaltstellung gebracht. Nach dem Rücktransfer der Messkörper in die Messeinrichtung und vor dem Rücktransfer der Targets aus dem Speicherzweig in den Instrumentationsfinger wird die Mehrwege-Armatur wieder in die erste Schaltstellung gebracht.

Vor und/oder nach dem Transferieren der Messkörper in die Messeinrichtung können die Messkörper im Messzweig, insbesondere in einem Parkabschnitt des Messzweigs zwischengeparkt werden. Vorzugsweise weist die Vorrichtung - wie oben beschrieben - entlang des Parkabschnitts eine Abschirmung gegen ionisierende Strahlung auf.

Zum Entnehmen der bestrahlten bzw. aktivierten Targets kann das Verfahren ferner die folgenden Schritte umfassen:
- Transferieren der Targets aus dem Instrumentationsfinger in den Reaktorzweig;
- Transferieren der bestrahlten Targets aus dem Reaktorzweig über die Mehrwege-Armatur und den Entnahmezweig in einen an den Entnahmezweig angekoppelten Entnahmebehälter.

Für den Transfer aus dem Reaktorzweig in den Entnahmezweig wird die Mehrwege-Armatur in die dritte Schaltstellung gebracht.

Alternativ zum direkten Transferieren aus dem Reaktorzweig in den Entnahmezweig kann ein Transferieren der bestrahlten Targets aus dem Reaktorzweig über die Mehrwege-Armatur in den Speicherzweig und ein anschliessendes Transferieren der bestrahlten Targets aus dem Speicherzweig über die Mehrwege-Armatur und den Entnahmezweig in einen an den Entnahmezweig angekoppelten Entnahmebehälter vorgesehen sein. Für den Transfer aus dem Reaktorzweig in den Speicherzweig wird die Mehrwege-Armatur in die erste Schaltstellung und für den Transfer aus dem Speicherzweig in den Entnahmezweig in die (alternative) dritte Schaltstellung gebracht.

Anstelle der Entnahme über den separaten Entnahmezweig können die bestrahlten bzw. aktivierten Targets auch über den Speicherzweig entnommen werden. In diesem Sinne kann das Verfahren die folgenden Schritte umfassen:
- Transferieren der Targets aus dem Instrumentationsfinger in den Reaktorzweig;
- Transferieren der bestrahlten Targets aus dem Reaktorzweig über die Mehrwege-Armatur und den Speicherzweig in einen an den Speicherzweig angekoppelten Entnahmebehälter.

Dabei können die beiden zuvor genannten Schritte auch in einem Schritt erfolgen.

Die Nuklidaktivierungs-Targets können als aktivierbare Materie beispielsweise 98-Mo (Molybdän), 176-Yb (Ytterbium) und/oder 51-V (Vanadium) aufweisen.

Weitere Einzelheiten, Merkmale und Vorteile der vorliegenden Erfindung ergeben sich aus der nachfolgenden Beschreibung und den dazugehörigen Zeichnungen, in denen beispielhafte Ausführungsformen der Erfindung erläutert sind.

In den Zeichnungen zeigen:
- Fig. 1: ein erstes Ausführungsbeispiel einer erfindungsgemässen Vorrichtung zum wahlweisen Transferieren von Nuklidaktivierungs-Targets und Messkörpern in bzw. aus einem Instrumentationsfinger eines Kernreaktors;
- Fig. 2a-2g: verschiedene Schaltstellungen der in der Vorrichtung gemäss Fig. 1 verwendeten Mehrwege-Armatur;
- Fig. 3: ein zweites Ausführungsbeispiel einer erfindungsgemässen Vorrichtung zum wahlweisen Transferieren von Nuklidaktivierungs-Targets und Messkörpern in bzw. aus einem Instrumentationsfinger eines Kernreaktors; und
- Fig. 4: ein zweites Ausführungsbeispiel einer erfindungsgemässen Vorrichtung zum wahlweisen Transferieren von Nuklidaktivierungs-Targets und Messkörpern in bzw. aus mehreren Instrumentationsfingern eines Kernreaktors; und
- Fig. 5: Detailansicht der in der Vorrichtung gemäss Fig. 4 verwendeten Mehrwege-Armatur.

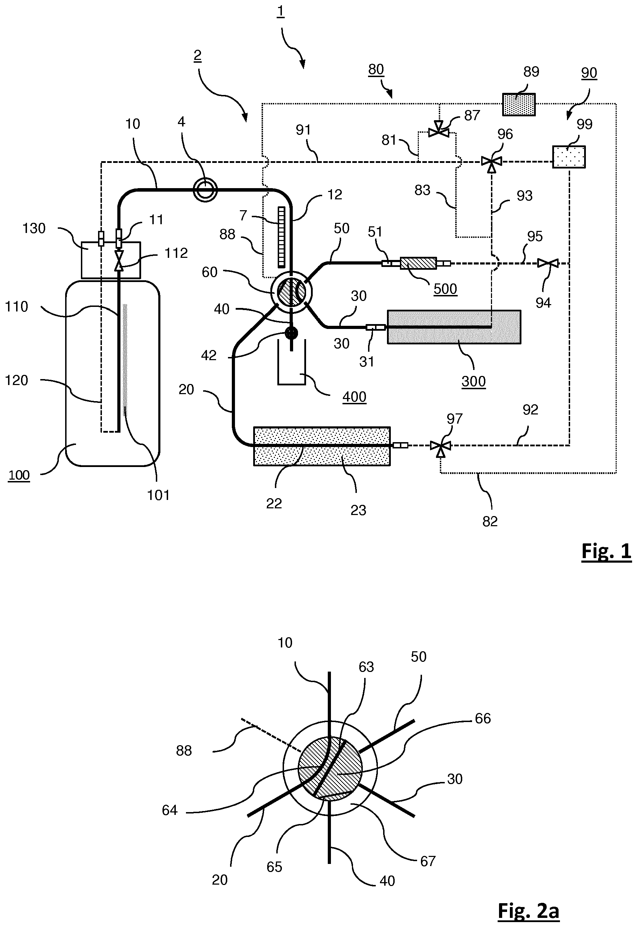

Fig. 1 zeigt in schematischer Darstellung ein erstes Ausführungsbeispiel einer erfindungsgemässen Vorrichtung 1 zum wahlweisen Transferieren von Nuklidaktivierungs-Targets und Messkörpern in bzw. aus einem Instrumentationsfinger 110 eines kommerziellen Kernreaktors 100. Die Vorrichtung 1 erlaubt es einerseits, den betrieblichen Vorschriften zur Durchführung sogenannter Kugelschussmessungen, die der Bestimmung der Leistungsdichteverteilung bzw. des Neutronenflusses im Reaktorkern dienen, zu genügen und andererseits in den dazwischenliegenden messfreien Zeiträumen, die von den Kernbrennstäben 101 emittierte Strahlung zur Bestrahlung von Nuklidaktivierungs-Targets zu nutzen.

Gemäss der Erfindung weist die Vorrichtung 1 ein Leitungssystem 2 zum Aufnehmen und Transportieren der Messkörper und Targets auf, das mehrere in einer Mehrwege-Armatur 60 mündende Leitungszweige 10, 20, 30, 40, 50 umfasst, die über die schaltbare Mehrwege-Armatur 60 wahlweise miteinander in Strömungsverbindung gebracht werden können. Im vorliegenden Ausführungsbeispiel umfasst das Leitungssystem 2 einen Reaktorzweig 10, der über eine endseitige Kupplung 11 im Bereich einer sogenannten Kabelbrücke 130 des Kernreaktors 100 an den Instrumentationsfinger 110 angekoppelt ist. Das Leitungssystem 2 umfasst ferner einen Speicherzweig 20 zum Zwischenspeichern der Messkörper oder Targets sowie einen Messzweig 30, der über eine endseitige Kupplung 31 an eine Messeinrichtung 300, insbesondere einen sogenannten, etwa aus US 3 711 714 bekannten Messtisch, zum Bestimmen der Aktivität der Messkörper angekoppelt ist. Im Weiteren umfasst das Leitungssystem 2 einen Einführzweig 50, der mittels einer endseitigen Kupplung 51 an eine Einführeinrichtung 500, etwa einen Transportbehälter, ankoppelbar ist, um neue, unbestrahlte Targets in das Leitungssystem 2 einzuführen. Zum Entnehmen von bestrahlten Targets weist das Leitungssystem 2 ferner einen Entnahmezweig 40 auf, über den die bestrahlten Targets in einen Entnahmebehälter 400 transferiert werden können.

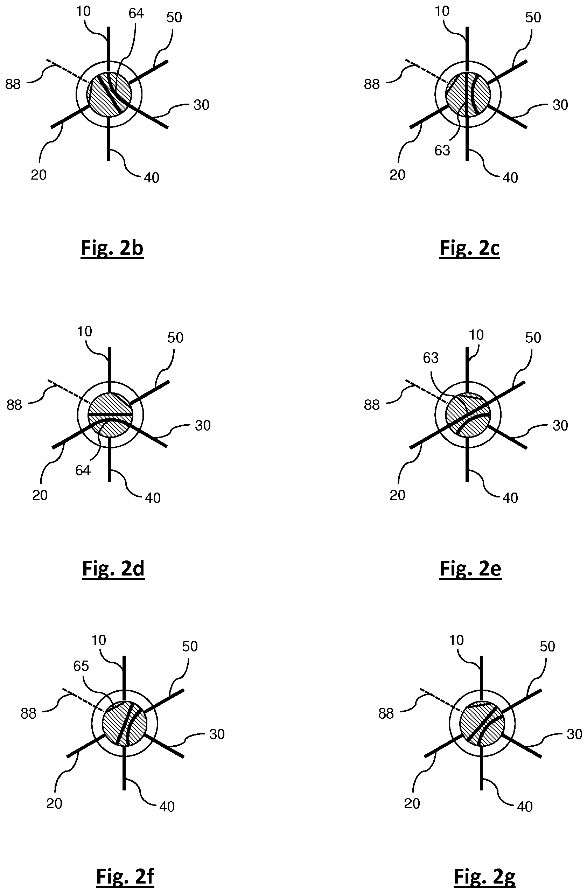

Sämtliche Zweige 10, 20, 30, 40, 50 des Leitungssystems münden knotenpunktartig in die Mehrwege-Armatur 60. Zudem mündet eine Abgasleitung 88 zum Abführen von Transportgas in die Mehrwege-Armatur 60. Die Fig. 2a-2g zeigen Details der Mehrwege-Armatur 60 gemäss dem vorliegenden Ausführungsbeispiel. Die schaltbare Mehrwege-Armatur 60 ist dazu ausgebildet, in einer ersten Schaltstellung den Reaktorzweig 10 mit dem Speicherzweig 20 (Fig. 2a), in einer zweiten Schaltstellung den Reaktorzweig 10 mit dem Messzweig 30 (Fig. 2b), in einer dritten Schaltstellung den Reaktorzweig 10 mit dem Entnahmezweig 40 (Fig. 2c), in einer vierten Schaltstellung den Speicherzweig 20 mit dem Messzweig 30 (Fig. 2d), in einer fünften Schaltstellung den Einführzweig 50 mit dem Speicherzweig 20 (Fig. 2e) und in einer sechsten Schaltstellung den Reaktorzweig 10 mit der Abgasleitung 88 (Fig. 2f) strömungsmässig zu verbinden. Ferner ist die Mehrwege-Armatur 60 dazu ausgebildet, in einer siebten Schaltstellung (Fig. 2g) alle in die Mehrwege-Armatur 60 mündenden Zweige 10, 20, 30, 40, 50 und die Abgasleitung 88 strömungsmässig voneinander zu entkoppeln.

Wie den Fig. 2a-2g zu entnehmen ist, ist die Mehrwege-Armatur 60 gemäss dem vorliegenden Ausführungsbeispiel als Mehrwege-Drehventil, insbesondere als 6/7-Wege-Drehventil ausgebildet, das ein in einem Armaturengehäuse 67 drehbar und dichtend gelagertes Stellelement 66 aufweist. Über umfangsseitig gleichmässig verteilte Anschlussstellen münden der Reaktorzweig 10, der Speicherzweig 20, der Messzweig 30, der Entnahmezweig 40, der Einführzweig 50 und die Abgasleitung 88 in das Armaturengehäuse 67. Die zwischen den verschiedenen Zweigen 10, 20, 30, 40, 50 bzw. der Abgasleitung 88 hergestellten strömungsmässigen Verbindungen werden im vorliegenden Ausführungsbeispiel durch drei Durchgangskanäle 63, 64, 65 im Stellelement 66 gebildet, die senkrecht zur Drehachse des Stellelements 66, d.h. parallel zur Drehebene des Stellelements 66 verlaufen. Ein erster Durchgangskanal 63 verläuft geradlinig in etwa mittig durch die Drehachse des Stellelements 66. Ein zweiter Durchgangskanal 64 verläuft in einem 120 Grad-Bogen seitlich symmetrisch versetzt zum ersten Durchgangskanal 63. Ein dritter Durchgangskanal 65 verläuft sekantenartig durch das Stellelement 66, insbesondere asymmetrisch versetzt zum ersten Durchgangskanal 63, gegenüberliegend dem zweiten Durchgangskanal 64. In der ersten Schaltstellung verbindet der zweite Durchgangskanal 64 den Reaktorzweig 10 mit dem Speicherzweig 20 (Fig. 2a). In der zweiten Schaltstellung verbindet ebenfalls der zweite Durchgangskanal 64 den Reaktorzweig 10 mit dem Messzweig 30 (Fig. 2b). In der dritten Schaltstellung verbindet der erste Durchgangskanal 63 den Reaktorzweig 10 mit dem Entnahmezweig 40 (Fig. 2c). In der vierten Schaltstellung verbindet der zweite Durchgangskanal 64 den Speicherzweig 20 mit dem Messzweig 30 (Fig. 2d). In der fünften Schaltstellung verbindet der erste Durchgangskanal 63 den Einführzweig 50 mit dem Speicherzweig 20 (Fig. 2e). In der sechsten Schaltstellung verbindet der dritte Durchgangskanal 65 den Reaktorzweig 10 mit der Abgasleitung 88 (Fig. 2f). In der siebten Schaltstellung ist keiner der drei Durchgangskanäle 63, 64, 65 mit irgendeinem der Zweige 10, 20, 30, 40, 50 oder der Abgasleitung 88 strömungsmässig verbunden. Zum Drehen des Stellelements, d.h. zum Schalten zwischen den verschiedenen Schaltstellungen, kann die Mehrwege-Armatur 60 einen Aktuator, insbesondere einen Servomotor, aufweisen (hier nicht gezeigt).

Während der erste und zweite Durchgangskanal 63, 64 zum Durchleiten von Targets und Messkörpern ausgebildet ist, ist der dritte Durchgangskanal 65 ausschliesslich zum Durchleiten von Transportgas ausgebildet. Dementsprechend entspricht der Durchmesser des ersten und zweiten Durchgangskanals 63, 64 im Wesentlichen dem Durchmesser der Zweige 10, 20, 30, 40, 50 und ist leicht grösser als der Durchmesser der Targets und Messkörper. Demgegenüber ist der Durchmesser des dritten Durchgangskanals 65 kleiner als der Durchmesser der Zweige 10, 20, 30, 40, 50 und kleiner als der Durchmesser der Targets und Messkörper. Auf diese Weise wird ein ungewolltes Passieren der Targets und Messkörper durch den dritten Durchgangskanal 65 verhindert.

Zum pneumatischen Transportieren der Messkörper und Targets weist die Vorrichtung 1 eine pneumatische Transporteinrichtung 90 auf. Als Transportgas kommt vorzugsweise Stickstoff zum Einsatz, das von einer Transportgasquelle 99 bereitgestellt wird. Von der Transportgasquelle 99 geht eine erste Transportgasleitung 92 aus, die zum pneumatischen Transportieren der Messkörper und Targets aus dem Speicherzweig 20 in Richtung Mehrwege-Armatur 60 endseitig an den Speicherzweig 20 gekoppelt ist. Ferner geht von der Transportgasquelle 99 eine zweite Transportgasleitung 91 aus, die zum pneumatischen Transportieren der Messkörper und Targets aus dem Instrumentationsfinger 110 über den Reaktorzweig 10 in Richtung Mehrwege-Armatur 60 mit dem Instrumentationsfinger 110 über eine reaktorseitige Finger-Gasleitung 120 gekoppelt ist. Die Kopplung an die Finger-Gasleitung 110 erfolgt ebenfalls an der Kabelbrücke 130 des Kernreaktors 100. Des Weiteren geht von der Transportgasquelle 99 über die zweite Transportgasleitung 91 und ein 3/2-Wege-Gasventil 96 eine dritte Transportgasleitung 93 aus, die zum pneumatischen Transportieren der Messkörper aus der Messvorrichtung 300 über den Messzweig 30 in Richtung Mehrwege-Armatur 60 endseitig mit der Messvorrichtung 300 gekoppelt ist. Zum pneumatischen Transportieren der Targets aus der Einführeinrichtung 500 in den Einführzweig 50 ist eine vierte Transportgasleitung 95 vorgesehen, die mit der Einführeinrichtung 50 endseitig gekoppelt ist. Im vorliegenden Ausführungsbeispiel zweigt die vierte Transportgasleitung 95 von der ersten Transportgasleitung 92 ab und ist gegenüber dieser mittels eines Gasventils 94 abriegelbar.

Zum Druckabbau bzw. Abführen von Transportgas weist die Vorrichtung 1 eine Abgaseinrichtung 80 auf, die neben der Abgasleitung 88 weitere Abgasleitungen umfasst. Eine erste (weitere) Abgasleitung 82 zweigt über ein 3/2-Wege-Gasventil 97 im endseitigen Bereich von der ersten Transportgasleitung 92 und dient zum Abführen von Transportgas aus dem Speicherzweig 10. Zwei weitere Abgasleitungen 81, 83 zweigen von der zweiten bzw. dritten Transportgasleitung 91, 93 ab und dienen zum Abführen von Transportgas aus dem Instrumentationsfinger 110 bzw. der Messeinrichtung 300. Die beiden Abgasleitungen 81, 83 werden jeweils über ein 3/2-Wege-Gasventil 87 in die Abgasleitung 88 geführt. Die Abgasleitung 88 und damit auch die beiden Abgasleitungen 81, 83 sowie die Abgasleitung 82 enden in einem Abgasfilter 89, in dem das abgeführte Transportgas von allfälligen Kontaminationen befreit wird.

Zum Aktivieren von Targets im Instrumentationsfinger kann die Vorrichtung 1 gemäss dem vorliegenden Ausführungsbeispiel wie folgt betrieben werden. Im Einführbehälter 500 vorgehaltene, unbestrahlte Targets werden über den Einführzweig durch Öffnen des Ventils 94 mittels Transportgas aus dem Behälter 500 über den Einführzweig 50 und die Mehrwege-Armatur 60 in den Speicherzweig 20 transferiert. Hierzu befindet sich die Mehrwege-Armatur 60 in der fünften Schaltstellung. Zum Abbauen des Transportgasdrucks im Speicherzweig 20 wird der Speicherzweig 20 über das Ventil 97 und die Abgasleitung 82 mit dem Abgasfilter 89 verbunden. Im System bereits vorhandene Messkörper befinden sich zu diesem Zeitpunkt vorzugsweise in der Messeinrichtung 300. Nach erfolgtem Transfer der Targets in den Speicherzweig 20 wird das Ventil 94 geschlossen und die Mehrwege-Armatur 60 in die erste Schaltstellung überführt, um den Speicherzweig 20 mit dem Reaktorzweig 10 zu verbinden. Sodann wird durch Umschalten des Ventils 97 Transportgas aus der ersten Transportgasleitung 92 in den Speicherzweig 20 eingelassen, um von dort die zwischengeparkten Targets über die Mehrwege-Armatur 60 und den Reaktorzweig 20 über den geöffneten Magnetanschlag 112 in den Instrumentationsfinger 110 zu transferieren. Zum Abbauen des Transportgasdrucks im Instrumentationsfinger 110 ist dieser über die Transportgasleitung 91, die Abgasleitung 81, das Ventil 87 und die Abgasleitung 88 mit dem Abgasfilter 89 verbunden.

Zum Aktivieren, d.h. zum Umwandeln der Targets in Radionuklide, werden diese im Instrumentationsfinger gehalten, typischerweise für mehrere Tage bis Wochen. Wird während dieser Zeit beispielsweise eine Kugelschussmessung aufgrund betrieblicher Sicherheitsvorschriften notwendig, können die Targets vorübergehend im Speicherzweig 20 zwischengeparkt werden. Hierzu wird in umgekehrter Reihenfolge durch Schliessen des Ventils 87 und Öffnen des Ventils 96 Transportgas über die Transportgasleitung 91 in die Finger-Gasleitung 120 eingelassen, wodurch die teilaktivierten Targets aus dem Instrumentationsfinger 110 über den Reaktorzweig 10 und das Mehrwegeventil 60 in den Speicherzweig 20 transferiert werden. Zum Druckabbauen im Speicherzweig 20 wird dieser wiederum über das Ventil 97 und die Abgasleitung 82 mit dem Abgasfilter 89 verbunden. Aus Strahlenschutzgründen ist jener Abschnitt 22 des Speicherzweigs 20, in dem die teilbestrahlten Targets zwischengeparkt sind, vorzugsweise - wie in Fig. 1 dargestellt - mit einer Abschirmung 23 gegen ionisierende Strahlung versehen.

Für die anstehende Kugelschussmessung wird die Mehrwege-Armatur 60 sodann in die zweite Schaltstellung gebracht. Anschliessend wird über das Ventil 96 und die Transportgasleitung 93 Transportgas in die Messeinrichtung 300 eingelassen, um die Messkörper über den Messzweig 30, die Mehrwege-Armatur 60 und den Reaktorzweig 10 in den Instrumentationsfinger 110 zu transferieren. Zum Druckabbau im Instrumentationsfinger 110 ist dieser wiederum über die Transportgasleitung 91, die Abgasleitung 81, das Ventil 87 und die Abgasleitung 88 mit dem Abgasfilter 89 verbunden. Nach erfolgter Bestrahlung der Messkörper werden diese in umgekehrter Reihenfolge durch Schliessen des Ventils 87 und Öffnen des Ventils 96 mittels Transportgas aus dem Instrumentationsfinger 110 über den Reaktorzweig 10, das Mehrwegeventil 60 und den Messzweig 30 zurück in die Messeinrichtung 300 transferiert. Dort kann die Aktivität der bestrahlten Messkörper zur Bestimmung des Leistungsdichteprofiles des Reaktors gemessen werden. Zwecks Druckabbaus ist die Messeinrichtung 300 während des Rücktransfers der Messkörper über die Transportgasleitung 93, die Abgasleitung 83, das Ventil 87 und die Abgasleitung 88 mit dem Abgasfilter 89 verbunden.

Sobald sich die Messkörper in der Messeinrichtung 300 befinden, kann die Aktivierung der teilbestrahlten Targets fortgesetzt werden. Hierzu werden die Targets - entsprechend dem bereits weiter oben beschriebenen Ablauf - aus dem Speicherzweig 20 zurück in den Instrumentationsfinger 110 transfiert.

Nach der vollständigen Aktivierung der Targets werden diese zwecks Entnahme aus dem Leitungssystem zunächst in den monoton fallenden Übergabeabschnitt 12 des Reaktorzweigs 10 transferiert, dessen Länge wenigstens der Länge der Kette der im Leitungssystem aneinander gereihten Targets entspricht. Hierzu wird das Ventil 87 geschlossen und das Ventil 96 geöffnet, um Transportgas über die Transportgasleitung 91 und die Finger-Gasleitung 120 in den Instrumentationsfinger 110 einzulassen. Zum Druckabbau im Reaktorzweig 10 befindet sich die Mehrwege-Armatur 60 in der sechsten Schaltstellung, um den Reaktorzweig 10 mit der Abgasleitung 88 und dem Abgasfilter 89 zu verbinden. In dieser Schaltstellung werden die Targets von der als Anschlag wirkenden Mehrwege-Armatur 60 zurückgehalten. Nach Schliessen der Transportgaszufuhr über das Ventil 96 und erfolgtem Druckabbau im Reaktorzweig 10, wird die Mehrwege-Armatur 60 in die dritte Schaltstellung gebracht, wodurch der Reaktorzweig 10 mit dem Entnahmezweig 40 verbunden wird. Auf diese Weise können die Targets drucklos und ausschliesslich gravitationsgetrieben aus dem monoton fallenden Übergabeabschnitt 12 des Reaktorzweigs 10 über die Mehrwege-Armatur 60 und den in vertikaler Richtung darunter angeordneten, ebenfalls monoton fallenden Entnahmezweig 40 in den bereitgestellten Entnahmebehälter 400 überführt werden.

Im vorliegenden Ausführungsbeispiel weist die Vorrichtung 1 im Entnahmezweig 40 eine Absperr-Armatur 42 zum gasdichten Absperren des Entnahmezweigs 40 auf. Hierdurch wird in vorteilhafter Weise das Kontaminationsrisiko minimiert.

Wie ferner Fig. 1 zu entnehmen ist, weist die Vorrichtung 1 im Reaktorzweig 10 ein Absperrventil 4 zum gasdichten Absperren des Reaktorzweigs 10 auf. In vorteilhafter Weise dient das Absperrventil 4 im Falle einer reaktorseitigen Leckage in das Leitungssystem 2 zum sofortigen Abriegeln der übrigen Teile des Leitungssystems, die den reaktorabgewandten, jenseits des Absperrventils 4 gelegenen Bereichen der Vorrichtung 1 zugordnet sind.

Zum Abseparieren von etwaig verwendeten Dummy-Targets können - wie weiter oben erläutert und ebenfalls in Fig.1 dargestellt - entlang des Übergabeabschnitts 12 ein oder mehrere Elektromagnete 7 angeordnet sein, die zum Festhalten von magnetischen Targets oder Dummy-Targets dienen.

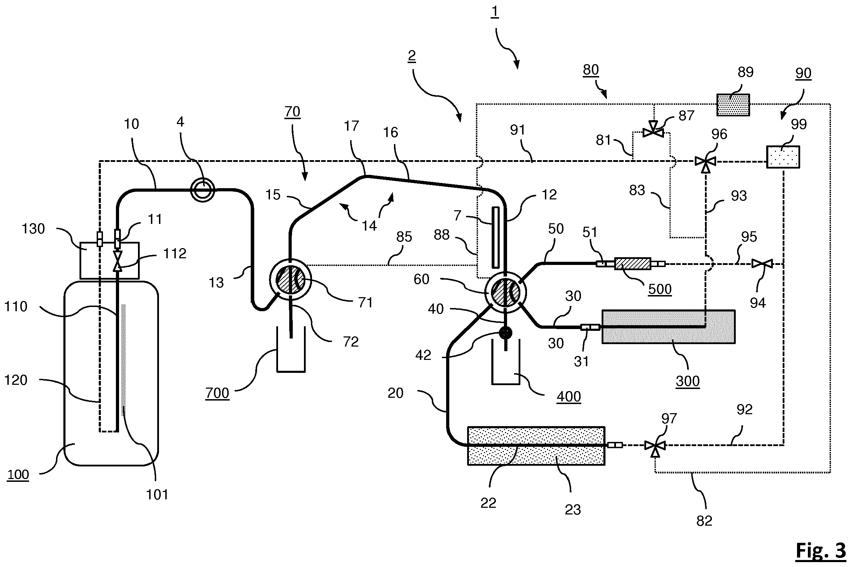

Fig. 3 zeigt ein zweites Ausführungsbeispiel der erfindungsgemässen TransferVorrichtung 1, die sich vom Ausführungsbeispiel gemäss Fig. 1 im Wesentlichen nur durch eine zusätzlich vorhandene Zwischenentnahme-Einrichtung 70 im Reaktorzweig 10 unterscheidet. Nachfolgend wird daher lediglich auf diesen Unterschied eingegangen. Ansonsten werden in Fig. 1 und 3 hinsichtlich beider Ausführungsformen für identische oder ähnliche Merkmale dieselben Bezugszeichen verwendet.

Die im zweiten Ausführungsbeispiel gemäss Fig. 3 vorhandene Zwischenentnahme-Einrichtung 70 umfasst eine Zwischenentnahme-Armatur 71, in die ein reaktorseitiger Abschnitt 13 des Reaktorzweigs 12, ein sich in Richtung Mehrwege-Armatur 60 erstreckender Zwischenentnahme-Abschnitt 14 des Reaktorzweigs 10, ein Zwischenentnahme-Zweig 72 und eine Abgasleitung 85 münden. Die Abgasleitung 85 ist über die Abgasleitung 88 mit dem Abgasfilter 89 verbunden. In einer ersten Schaltstellung verbindet die Zwischenentnahme-Armatur 71 den reaktorseitigen Abschnitt 13 mit dem Zwischenentnahme-Abschnitt 14 des Reaktorzweigs 10, in einer zweiten Schaltstellung den Zwischenentnahme-Abschnitt 14 mit dem Zwischenentnahme-Zweig 72 und in einer dritten Schaltstellung den Zwischenentnahme-Abschnitt 14 zwecks Druckabbau mit der Abgasleitung 85. In einer vierten Schaltstellung sperrt die Zwischenentnahme-Armatur 71 vollständig.

Zum Abseparieren einer (Teil-) Menge von Dummy-Targets oder Targets weist der Zwischenentnahme-Abschnitt 14 im Übergang zwischen einem ersten und einem zweiten monoton fallenden Teilabschnitt 15, 16 einen Apex 17 auf. Durch Transferieren der gesamten Target-Kette in den Zwischenentnahme-Abschnitt 14 bis zum Anschlagen an die (abriegelnde) Zwischenentnahme-Armatur 71 sammeln sich die abzuseparierende bzw. zu entnehmende (Teil-) Menge von Dummy-Targets oder Targets im ersten Teilabschnitt 15, während sich die nicht zu entnehmende (Teil-) Menge jenseits des Apex 17 im zweiten Teilabschnitt 16 befindet. Durch Umschalten in die zweite Schaltstellung kann die abzuseparierende bzw. zu entnehmende (Teil-) Menge gravitationsgetrieben in den Zwischenentnahme-Zweig 72 und weiter in einen Zwischenentnahme-Behälter 700 überführt werden, während die nicht zu entnehmende (Teil-) Menge im zweiten Teilabschnitt 16 verbleibt. Von dort aus kann die nicht zu entnehmende (Teil-) Menge zweckbestimmt an eine andere Stelle im Leitungssystem 2 transferiert werden.

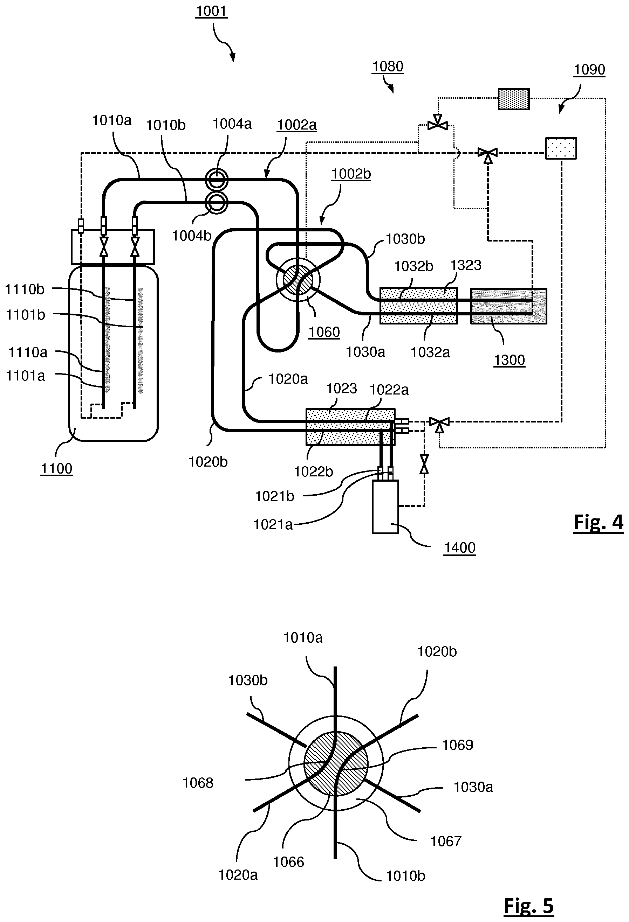

Fig. 4 zeigt ein drittes Ausführungsbeispiel der erfindungsgemässen Transfervorrichtung 1001, die sich von den Ausführungsbeispielen gemäss Fig. 1 und Fig. 3 dadurch unterscheidet, dass das einem Instrumentationsfinger zugeordnete Leitungssystem keinen separaten Einführzweig und Entnahmezweig aufweist, die jeweils in die Mehrwege-Armatur münden. Stattdessen erfolgen in diesem Ausführungsbeispiel das Einführen der unbestrahlten Targets und die Entnahme der bestrahlten bzw. aktivierten Targets jeweils über den einem Instrumentationsfinger zugeordneten Speicherzweig 1020a, 1020b. Hierzu kann der jeweils einem Instrumentationsfinger zugeordnete Speicherzweig 1020a, 1020b an seinem der Mehrwege-Armatur abgewandten Ende an eine kombinierte Einführ-Entnahme-Einrichtung angekoppelt werden, die einen abschirmenden Transferbehälter 1400 umfasst. Aus diesem Behälter 1400 können unbestrahlte Targets beispielsweise mittels Druckluft in den Speicherzweig eingeführt, und umgekehrt nach dem Bestrahlen aktivierte Targets aus dem Speicherzweig in den Transferbehälter 1400 ausgebracht werden. Wie auch im ersten und zweiten Ausführungsbeispiel weisen die jeweils einem Instrumentationsfinger zugeordneten Speicherzweige 1020a, 1020b einen abgeschirmten Abschnitt 1022a, 1022b auf, in dem Targets zwischengespeichert werden können. Vorliegend weist die Transfervorrichtung hierzu eine gemeinsame Abschirmung 1023 gegen ionisierende Strahlung auf, die die abgeschirmten Abschnitte 1022a, 1022b sämtlicher Speicherzweige umgibt.

Im Endbereich vor der Kupplung kann jeder Speicherzweig 1020a, 1020b ferner eine Blockiereinrichtung (nicht dargestellt), beispielsweise einen magnetisch betätigbaren Anschlag, etwa einen Pin, Stift oder Bolzen, zum Blockieren des Transportweges durch den Speicherzweig aufweisen. Zudem können in den Speicherzweigen 1020a, 1020b, insbesondere in den abgeschirmten Abschnitten 1022a, 1022b, Elektromagnete (nicht dargestellt) angeordnet sein, die zum Festhalten von magnetischen Targets oder Dummy-Targets dienen und somit ein Separieren von Targets und Dummy-Targets ermöglichen.

Durch den Verzicht auf separate Entnahme- und Einführzweige kann eine einzelne Mehrwege-Armatur in vorteilhafter Weise dazu verwendet werden, mehrere Instrumentationsfinger zu bedienen. Im Ausführungsbeispiel gemäss Fig. 4 werden zwei Instrumentationsfinger 1110a, 1110b mit einer einzigen Mehrwege-Armatur 1060 bedient. Wie insbesondere Fig. 5 im Detail gezeigt, ist die Mehrwege-Armatur 1060 gemäss dem vorliegenden Ausführungsbeispiel als Drehventil ausgebildet, das ein Armaturengehäuse 1067 mit sechs Anschlussstellen sowie ein darin drehbar gelagertes Stellelement 1066 aufweist. In dem Stellelement 1066 sind ein erster Durchgangskanal 1068 und ein zweiter Durchgangskanal 1069 ausgebildet, die jeweils in einem 120°-Bogen gekrümmt verlaufen und spiegelsymmetrisch zueinander angeordnet sind. An jeweils gegenüberliegenden Anschlussstellen sind jeweils zwei Reaktorzweige 1010a, 1010b, zwei Speicherzweige 1020a, 1020b und zwei Messzweige 1030a, 1030b angeschlossen, wobei jeweils ein Reaktorzweig 1010a, 1010b, ein Speicherzweig 1020a, 1020b und ein Messzweig 1030a, 1030b einem der Instrumentationsfinger 1110a, 1110b zugeordnet sind und insoweit ein Sub-Leitungssystem 1002a, 1002b bilden. In verschiedenen Schaltstellungen verbindet diese Mehrwege-Armatur 1060 jeweils einen Reaktorzweig 1010a, 1010b wahlweise mit einem zugeordneten Speicherzweig 1020a, 1020b oder einem zugeordneten Messzweig 1030a, 1030b. Zusätzlich mündet in die Mehrwege-Armatur eine Abgasleitung zur Entgasung des Armaturengehäuses.

Darüber hinaus unterscheidet sich die Transfervorrichtung 1001 gemäss Fig. 4 von jenen der Fig. 1 und 3 dadurch, dass die Vorrichtung 1001 in den Messzweigen 1030a, 1030b jeweils einen Parkierabschnitt 1032a, 1032b zum Zwischenparkieren der Messkörper oder Targets aufweist. Entlang der Parkierabschnitte 1032a, 1032b weist die Vorrichtung 1001 zudem eine Abschirmung 1033 gegen ionisierende Strahlung auf. Hierdurch wird eine alternative Möglichkeit geschaffen, die Messkörper zu jenen Zeiten, in denen keine Messung durchgeführt wird, in dem jeweils einem Instrumentationsfinger 1110a, 1110b zugeordneten Parkierabschnitt 1032a, 1032b unter abgeschirmten Bedingungen, zwischenzuparken. In dem der Mehrwege-Armatur 1060 abgewandten Endbereich der Parkierabschnitte 1032a, 1032b kann jeweils eine Blockiereinrichtung oder Halteeinrichtung (nicht dargestellt) vorgesehen sein, beispielsweise ein magnetisch betätigbarer Anschlag oder ein Elektromagnet, um den Transportweg aus den Parkierabschnitten 1032a, 1032b in die der Mehrwege-Armatur 1060 abgewandten Abschnitte der Messzweige 1030a, 1030b zu blockieren und so die Messkörper in den Parkierabschnitten 1032a, 1032b zu halten, beispielsweise unter Schwerkrafteinfluss gegen einen mechanischen Anschlag oder gegen eine magnetische Haltekraft.

Wie auch die Vorrichtungen gemäss Fig. 1 und 3, weist auch die Transfervorrichtung 1001 gemäss Fig. 4 in jedem der Reaktorzweige 1010a, 1010b ein Absperrventil 1004a, 1004b zum gasdichten Absperren des jeweiligen Reaktorzweigs 1010a, 1010b auf. Ebenso weist die Transfervorrichtung 1001 gemäss Fig. 4 wie die beiden anderen Ausführungsformen zum Transportieren der Messkörper und Targets durch die Sub-Leitungssysteme 1002a, 1002b eine vorzugsweise gemeinsame pneumatische Transporteinrichtung 1090 sowie eine vorzugsweise gemeinsame Abgaseinrichtung 1080 auf.

## Patentansprüche

1. Vorrichtung (1, 1001) zum wahlweisen Transferieren von Nuklidaktivierungs-Targets und Messkörpern in bzw. aus wenigstens einem Instrumentationsfinger (110, 1110a, 1110b) eines Kernreaktors (100; 1100), wobei die Vorrichtung (1, 1001) aufweist:
- ein Leitungssystem (2, 1002a, 1002b) zum Aufnehmen und Transportieren der Messkörper und Targets, umfassend einen Reaktorzweig (10, 1010a, 1010b) mit einer endseitigen Kupplung (11) zum Ankoppeln an den Instrumentationsfinger (110, 1110a, 1110b), einen Speicherzweig (20, 1020a, 1020b) zum Zwischenspeichern der Messkörper oder Targets und einen Messzweig (30, 1030a, 1030b) mit einer endseitigen Kupplung (31) zum Ankoppeln an eine Messeinrichtung (300, 1300) zum Bestimmen einer durch energetisches Anregen im Kernreaktor veränderlichen Eigenschaft der Messkörper;
- eine schaltbare Mehrwege-Armatur (60, 1060), in die unmittelbar wenigstens der Reaktorzweig (10, 1010a, 1010b), der Speicherzweig (20, 1020a, 1020b), und der Messzweig (30, 1030a, 1030b) knotenpunktartig münden und die dazu ausgebildet ist, in einer ersten Schaltstellung den Reaktorzweig (10, 1010a, 1010b) mit dem Speicherzweig (20, 1020a, 1020b) und in einer zweiten Schaltstellung den Reaktorzweig (10, 1010a, 1010b) mit dem Messzweig (30, 1030a, 1030b) strömungsmässig zu verbinden;
- eine pneumatische oder mechanische Transporteinrichtung (90, 1090) zum Transportieren der Messkörper und Targets.

2. Vorrichtung (1, 1001) nach Anspruch 1, wobei das Leitungssystem (2) einen Entnahmezweig (40) zum Entnehmen von bestrahlten Targets aufweist.

3. Vorrichtung (1, 1001) nach Anspruch 2, wobei der Entnahmezweig (40) unmittelbar in die schaltbare Mehrwege-Armatur (60) mündet und die Mehrwege-Armatur (60) ferner dazu ausgebildet ist, in einer dritten Schaltstellung den Entnahmezweig (40) mit dem Reaktorzweig (10, 1010a, 1010b) oder dem Speicherzweig (20, 1020a, 1020b) strömungsmässig zu verbinden.

4. Vorrichtung nach Anspruch 3, wobei der Entnahmezweig (40) in vertikaler Richtung unterhalb der Mehrwege-Armatur (60) angeordnet ist.

5. Vorrichtung (1, 1001) nach einem der vorhergehenden Ansprüche, wobei die Vorrichtung (1, 1001) wenigstens entlang eines Abschnitts (22) des Speicherzweigs (20, 1020a, 1020b) eine Abschirmung (23, 1023) gegen ionisierende Strahlung aufweist.

6. Vorrichtung (1, 1001) nach einem der vorhergehenden Ansprüche, wobei die Vorrichtung (1, 1001) im Messzweig (30, 1030a, 1030b) einen Parkabschnitt (1032a, 1032b) zum Zwischenparkieren der Messkörper oder Targets aufweist.

7. Vorrichtung (1, 1001) nach einem der vorhergehenden Ansprüche, wobei die Vorrichtung (1, 1001) eine Abschirmung (1023) wenigstens entlang eines Abschnitts (1032a, 1032b) des Messzweigs (30, 1030a, 1030b) gegen ionisierende Strahlung aufweist.

8. Vorrichtung (1, 1001) nach einem der vorhergehenden Ansprüche, wobei der Speicherzweig (20, 1020a, 1020b) zum Einführen von unbestrahlten Targets oder Entnehmen von bestrahlten Targets eine endseitige Kupplung (1021a, 1021b) zum Ankoppeln an eine Einführeinrichtung, eine Entnahmeeinrichtung und/oder eine kombinierte Einführ-Entnahme-Einrichtung (1400) aufweist.

9. Vorrichtung (1, 1001) nach einem der vorhergehenden Ansprüche, wobei die Mehrwege-Armatur (60) ferner dazu ausgebildet ist, in einer vierten Schaltstellung den Speicherzweig (20, 1020a, 1020b) mit dem Messzweig (30, 1030a, 1030b) strömungsmässig zu verbinden.

10. Vorrichtung (1, 1001) nach einem der vorhergehenden Ansprüche, wobei das Leitungssystem (2, 1002a, 1002b) ferner einen Einführzweig (50) mit einer endseitigen Kupplung (51) zum Ankoppeln an eine Einführeinrichtung (500) zum Einführen von unbestrahlten Targets aufweist, wobei der Einführzweig (50) unmittelbar in die Mehrwege-Armatur (60) mündet und die Mehrwege-Armatur (60) ferner dazu ausgebildet ist, in einer fünften Schaltstellung den Einführzweig (50) mit dem Reaktorzweig (10, 1010a, 1010b) oder dem Speicherzweig (20, 1020a, 1020b) strömungsmässig zu verbinden.

11. Vorrichtung (1, 1001) nach einem der vorhergehenden Ansprüche, ferner aufweisend eine Abgaseinrichtung (80, 1080) zum Abführen von Transportgas aus dem Messzweig (30, 1030a, 1030b), aus dem Speicherzweig (20, 1020a, 1020b) und/oder aus dem Reaktorzweig (10, 1010a, 1010b), wobei die Abgaseinrichtung (80) eine unmittelbar in die Mehrwege-Armatur (60, 1060) mündende Abgasleitung (88) aufweist und die Mehrwege-Armatur (60, 1060) ferner dazu ausgebildet ist, in einer sechsten Schaltstellung den Reaktorzweig (10, 1010a, 1010b) mit der Abgasleitung (88) strömungsmässig zu verbinden.

12. Vorrichtung (1, 1001) nach einem der vorhergehenden Ansprüche, wobei die Vorrichtung (1, 1001) im Reaktorzweig (10, 1010a, 1010b) ein Absperrventil (4, 1004a, 1004b) zum gasdichten Absperren des Reaktorzweigs (10, 1010a, 1010b) aufweist.

13. Vorrichtung (1, 1001) nach einem der vorhergehenden Ansprüche, wobei die Vorrichtung (1, 1001) im Reaktorzweig (10, 1010a, 1010b) eine Zwischenentnahme-Armatur (71) aufweist, in die ein reaktorseitiger Abschnitt (13) des Reaktorzweigs (10, 1010a, 1010b), ein sich in Richtung Mehrwege-Armatur (60, 1060) erstreckender Zwischenentnahme-Abschnitt (14) des Reaktorzweigs (10, 1010a, 1010b) und ein Zwischenentnahme-Zweig (72) münden, wobei die Zwischenentnahme-Armatur (71) dazu ausgebildet ist, in einer ersten Schaltstellung den reaktorseitigen Abschnitt (13) mit dem Zwischenentnahme-Abschnitt (14) und in einer zweiten Schaltstellung den Zwischenentnahme-Abschnitt (14) mit dem Zwischenentnahme-Zweig (72) strömungsmässig zu verbinden.

14. Vorrichtung (1, 1001) nach Anspruch 13, wobei der Zwischenentnahme-Abschnitt (14) im Übergang zwischen einem ersten und einem zweiten monoton fallenden Teilabschnitt (15, 16) des Zwischenentnahme-Abschnitts (14) einen Apex (17) aufweist, wobei der erste Teilabschnitt (15) in die Zwischenentnahme-Armatur (71) mündet.

15. Vorrichtung (1, 1001) nach Anspruch 13 oder 14, wobei der Zwischenentnahme-Zweig (72) in vertikaler Richtung unterhalb der Zwischenentnahme-Armatur (71) angeordnet ist.

16. Verfahren zum Aktivieren von Nuklidaktivierungs-Targets und optional zum energetischen Anregen von Messkörpern in einem Instrumentationsfinger (110, 1110a, 1110b) eines Kernreaktors (100, 1100) unter Verwendung einer Vorrichtung (1, 1001) nach einem der vorhergehenden Ansprüche zum Transferieren der Nuklidaktivierungs-Targets und Messkörper, wobei das Verfahren die folgenden Schritte umfasst:
- Einführen von unbestrahlten Nuklidaktivierungs-Targets in das Leitungssystem (2, 1002a, 1002b) der an den Instrumentationsfinger (110, 1110a, 1110b) angekoppelten Vorrichtung (1, 1001);
- Transferieren der unbestrahlten Targets über den Reaktorzweig (10, 1010a, 1010b) in den Instrumentationsfinger (110, 1110a, 1110b);
- Halten der Targets im Instrumentationsfinger (110, 1110a, 1110b) zur Nuklidaktivierung durch Bestrahlen.

17. Verfahren nach Anspruch 16, ferner umfassend:
- Unterbrechen des Haltens der Targets im Instrumentationsfinger (110, 1110a, 1110b);
- Transferieren der Targets aus dem Instrumentationsfinger (110, 1110a, 1110b) über den Reaktorzweig (10, 1010a, 1010b) und die Mehrwege-Armatur (60, 1060) in den Speicherzweig (20, 1020a, 1020b) zum dortigen Zwischenspeichern;
- Transferieren von Messkörpern aus einer an den Messzweig angekoppelten Messeinrichtung (300, 1300) oder aus einen Parkabschnitt im Messzweig über den Messzweig (30, 1030a, 1030b), die Mehrwege-Armatur (60, 1060) und den Reaktorzweig (10, 1010a, 1010b) in den Instrumentationsfinger (110, 1110a, 1110b);
- Halten der Messkörper im Instrumentationsfinger (110, 1110a, 1110b) zum energetischen Anregen;
- Transferieren der Messkörper aus dem Instrumentationsfinger (110, 1110a, 1110b) über den Reaktorzweig (10, 1010a, 1010b), die Mehrwege-Armatur (60, 1060) und den Messzweig (30, 1030a, 1030b) in die Messeinrichtung (300, 1300) zum Bestimmen einer durch das energetische Anregen im Kernreaktor veränderlichen Eigenschaft der Messkörper;
- Transferieren der Targets aus dem Speicherzweig (20, 1020a, 1020b) über die Mehrwege-Armatur (60, 1060) und den Reaktorzweig (10, 1010a, 1010b) in den Instrumentationsfinger (110, 1110a, 1110b);
- Fortführen des Haltens der Targets im Instrumentationsfinger (110, 1110a, 1110b).

18. Verfahren nach Anspruch 16 oder 17, ferner umfassend:
- Transferieren der Targets aus dem Instrumentationsfinger (110, 1110a, 1110b) in den Reaktorzweig (10, 1010a, 1010b);
- Transferieren der bestrahlten Targets aus dem Reaktorzweig (10, 1010a, 1010b) über die Mehrwege-Armatur (60, 1060) und den Entnahmezweig (40) in einen an den Entnahmezweig (40) angekoppelten Entnahmebehälter (400) oder Transferieren der bestrahlten Targets aus dem Reaktorzweig (10, 1010a, 1010b) über die Mehrwege-Armatur (60, 1060) und den Speicherzweig (20, 1020a, 1020b) in einen an den Speicherzweig (40) angekoppelten Entnahmebehälter (450) .

## Claims

1. Apparatus (1, 1001) for selectively transferring nuclide activation targets and measurement bodies into and out of at least one instrumentation finger (110, 1110a, 1110b) of a nuclear reactor (100; 1100), wherein the apparatus (1, 1001) comprises:
- a line system (2, 1002a, 1002b) for receiving and transporting the measurement bodies and targets, comprising a reactor branch (10, 1010a, 1010b) having a terminal coupling (11) for coupling to the instrumentation finger (110, 1110a, 1110b), a storage branch (20, 1020a, 1020b) for intermediate storage of the measurement bodies or targets, and a measurement branch (30, 1030a, 1030b) having a terminal coupling (31) for coupling to a measurement device (300, 1300) for determining a property of the measurement bodies, that is variable by energetic excitation in the nuclear reactor;
- a switchable multi-way valve (60, 1060) into which at least the reactor branch (10, 1010a, 1010b), the storage branch (20, 1020a, 1020b) and the measurement branch (30, 1030a, 1030b) directly open node-like and which is configured, in a first switching position, to fluidically connect the reactor branch (10, 1010a, 1010b) to the storage branch (20, 1020a, 1020b) and, in a second switching position, to fluidically connect the reactor branch (10, 1010a, 1010b) to the measurement branch (30, 1030a, 1030b); and
- a pneumatic or mechanical transport device (90, 1090) for transporting the measurement bodies and targets.

2. Apparatus (1, 1001) according to claim 1, wherein the line system (2) comprises a removal branch (40) for removing irradiated targets.

3. Apparatus (1, 1001) according to claim 2, wherein the removal branch (40) opens directly into the switchable multi-way valve (60), and the multi-way valve (60) is further configured, in a third switching position, to fluidically connect the removal branch (40) to the reactor branch (10, 1010a, 1010b) or to the storage branch (20, 1020a, 1020b).

4. Apparatus according to claim 3, wherein the removal branch (40) is arranged in the vertical direction below the multi-way valve (60).

5. Apparatus (1, 1001) according to one of the preceding claims, wherein the apparatus (1, 1001) comprises a shield (23, 1023) against ionising radiation at least along a portion (22) of the storage branch (20, 1020a, 1020b).

6. Apparatus (1, 1001) according to one of the preceding claims, wherein the apparatus (1, 1001) comprises a parking portion (1032a, 1032b) in the measurement branch (30, 1030a, 1030b) for intermediate parking of the measurement bodies or targets.

7. Apparatus (1, 1001) according to one of the preceding claims, wherein the apparatus (1, 1001) comprises a shield (1023) against ionising radiation at least along a portion (1032a, 1032b) of the measurement branch (30, 1030a, 1030b).

8. Apparatus (1, 1001) according to one of the preceding claims, wherein for introducing non-irradiated targets or removing irradiated targets the storage branch (20, 1020a, 1020b) comprises a terminal coupling (1021a, 1021b) for coupling to an introduction device, a removal device and/or a combined introduction/removal device (1400).

9. Apparatus (1, 1001) according to one of the preceding claims, wherein the multi-way valve (60) is further configured, in a fourth switching position, to fluidically connect the storage branch (20, 1020a, 1020b) to the measurement branch (30, 1030a, 1030b).

10. Apparatus (1, 1001) according to one of the preceding claims, wherein the line system (2, 1002a, 1002b) further comprises an introduction branch (50) having a terminal coupling (51) for coupling to an introduction device (500) for introducing non-irradiated targets, wherein the introduction branch (50) opens directly into the multi-way valve (60), and the multi-way valve (60) is further configured, in a fifth switching position, to fluidically connect the introduction branch (50) to the reactor branch (10, 1010a, 1010b) or to the storage branch (20, 1020a, 1020b).

11. Apparatus (1, 1001) according to one of the preceding claims, further comprising an exhaust gas device (80, 1080) for discharging transport gas from the measurement branch (30, 1030a, 1030b), from the storage branch (20, 1020a, 1020b) and/or from the reactor branch (10, 1010a, 1010b), wherein the exhaust gas device (80) comprises an exhaust gas line (88) opening directly into the multi-way valve (60, 1060), and the multi-way valve (60, 1060) is further configured, in a sixth switching position, to fluidically connect the reactor branch (10, 1010a, 1010b) to the exhaust gas line (88).

12. Apparatus (1, 1001) according to one of the preceding claims, wherein the apparatus (1, 1001) comprises a shut-off valve (4, 1004a, 1004b) in the reactor branch (10, 1010a, 1010b) for gas-tightly shutting-off the reactor branch (10, 1010a, 1010b).

13. Apparatus (1, 1001) according to one of the preceding claims, wherein the apparatus (1, 1001) comprises, in the reactor branch (10, 1010a, 1010b), an intermediate removal valve (71) into which a reactor-side portion (13) of the reactor branch (10, 1010a, 1010b), an intermediate removal portion (14) of the reactor branch (10, 1010a, 1010b) extending in the direction of the multi-way valve (60, 1060), and an intermediate removal branch (72) open, wherein the intermediate removal valve (71) is configured, in a first switching position, to fluidically connect the reactor-side portion (13) to the intermediate removal portion (14) and, in a second switching position, to fluidically connect the intermediate removal portion (14) to the intermediate removal branch (72).

14. Apparatus (1, 1001) according to claim 13, wherein the intermediate removal portion (14) comprises an apex (17) in the transition between a first and a second monotonically falling sub-portion (15, 16) of the intermediate removal portion (14), wherein the first sub-portion (15) opens into the intermediate removal valve (71).

15. Apparatus (1, 1001) according to claim 13 or claim 14, wherein the intermediate removal branch (72) is arranged in the vertical direction below the intermediate removal valve (71).

16. A method of activating nuclide activation targets and optionally energetically exciting measurement bodies in an instrumentation finger (110, 1110a, 1110b) of a nuclear reactor (100, 1100) using an apparatus (1, 1001) according to one of the preceding claims for transferring the nuclide activation targets and measurement bodies, wherein the method comprises the following steps:
- introducing non-irradiated nuclide activation targets into the line system (2, 1002a, 1002b) of the apparatus (1, 1001) coupled to the instrumentation finger (110, 1110a, 1110b);
- transferring the non-irradiated targets via the reactor branch (10, 1010a, 1010b) into the instrumentation finger (110, 1110a, 1110b); and
- holding the targets in the instrumentation finger (110, 1110a, 1110b) for nuclide activation by irradiation.

17. A method according to claim 16, further comprising:
- interrupting holding the targets in the instrumentation finger (110, 1110a, 1110b);
- transferring the targets from the instrumentation finger (110, 1110a, 1110b) via the reactor branch (10, 1010a, 1010b) and the multi-way valve (60, 1060) into the storage branch (20, 1020a, 1020b) for intermediate storage therein;
- transferring measurement bodies from a measurement device (300, 1300) coupled to the measurement branch or from a parking portion in the measurement branch into the instrumentation finger (110, 1110a, 1110b) via the measurement branch (30, 1030a, 1030b), the multi-way valve (60, 1060) and the reactor branch (10, 1010a, 1010b);
- holding the measurement bodies in the instrumentation finger (110, 1110a, 1110b) for energetic excitation;
- transferring the measurement bodies from the instrumentation finger (110, 1110a, 1110b) via the reactor branch (10, 1010a, 1010b), the multi-way valve (60, 1060) and the measurement branch (30, 1030a, 1030b) to the measurement device (300, 1300) for determining a property of the measurement bodies, that is variable by the energetic excitation in the nuclear reactor;
- transferring the targets from the storage branch (20, 1020a, 1020b) via the multi-way valve (60, 1060) and the reactor branch (10, 1010a, 1010b) into the instrumentation finger (110, 1110a, 1110b); and
- continuing holding of the targets in the instrumentation finger (110, 1110a, 1110b).

18. A method according to claim 16 or claim 17, further comprising:
- transferring the targets from the instrumentation finger (110, 1110a, 1110b) into the reactor branch (10, 1010a, 1010b); and
- transferring the irradiated targets from the reactor branch (10, 1010a, 1010b) via the multi-way valve (60, 1060) and the removal branch (40) into a removal container (400) coupled to the removal branch (40) or transferring the irradiated targets from the reactor branch (10, 1010a, 1010b) via the multi-way valve (60, 1060) and the storage branch (20, 100, 100) into a removal container (450) coupled to the storage branch (40).

## Revendications

1. Dispositif (1, 1001) pour transférer sélectivement des cibles d'activation de nucléides et des corps de mesure dans et hors d'au moins un doigt d'instrumentation (110, 1110a, 1110b) d'un réacteur nucléaire (100 ; 1100), le dispositif (1, 1001) comprenant :
- un système de conduits (2, 1002a, 1002b) pour recevoir et transporter les corps de mesure et les cibles, comprenant une branche de réacteur (10, 1010a, 1010b) pourvu d'un accouplement d'extrémité (11) pour l'accouplement au doigt d'instrumentation (110, 1110a, 1110b), une branche de stockage (20, 1020a, 1020b) pour stocker temporairement les corps de mesure ou les cibles, et une branche de mesure (30, 1030a, 1030b) pourvu d'un accouplement d'extrémité (31) pour l'accouplement à un moyen de mesure (300, 1300) pour déterminer une propriété des corps de mesure qui est variable par excitation énergétique dans le réacteur nucléaire ;
- un raccord à voies multiples (60, 1060) commutable, dans lequel débouchent directement, à la manière d'un nœud, au moins la branche de réacteur (10, 1010a, 1010b), la branche de stockage (20, 1020a, 1020b) et la branche de mesure (30, 1030a, 1030b), et qui est réalisé pour relier en termes d'écoulement, dans une première position de commutation, la branche de réacteur (10, 1010a, 1010b) à la branche de stockage (20, 1020a, 1020b) et, dans une deuxième position de commutation, la branche de réacteur (10, 1010a, 1010b) à la branche de mesure (30, 1030a, 1030b);
- un moyen de transport pneumatique ou mécanique (90, 1090) pour transporter les corps de mesure et les cibles.

2. Dispositif (1, 1001) selon la revendication 1, dans lequel le système de conduits (2) comprend une branche de prélèvement (40) pour prélever des cibles irradiées.

3. Dispositif (1, 1001) selon la revendication 2, dans lequel la branche de prélèvement (40) débouche directement dans le raccord à voies multiples (60) commutable, et le raccord à voies multiples (60) est en outre réalisé pour relier en termes d'écoulement, dans une troisième position de commutation, la branche de prélèvement (40) à la branche de réacteur (10, 1010a, 1010b) ou à la branche de stockage (20, 1020a, 1020b).

4. Dispositif selon la revendication 3, dans lequel la branche de prélèvement (40) est disposée en direction verticale en dessous du raccord à voies multiples (60).

5. Dispositif (1, 1001) selon l'une des revendications précédentes, dans lequel le dispositif (1, 1001) comprend un blindage (23, 1023) contre le rayonnement ionisant au moins le long d'une portion (22) de la branche de stockage (20, 1020a, 1020b).

6. Dispositif (1, 1001) selon l'une des revendications précédentes, dans lequel le dispositif (1, 1001) comprend dans la branche de mesure (30, 1030a, 1030b) une portion de stationnement (1032a, 1032b) pour le stationnement intermédiaire des corps de mesure ou des cibles.

7. Dispositif (1, 1001) selon l'une des revendications précédentes, dans lequel le dispositif (1, 1001) comprend un blindage (1023) contre le rayonnement ionisant au moins le long d'une portion (1032a, 1032b) de la branche de mesure (30, 1030a, 1030b).

8. Dispositif (1, 1001) selon l'une des revendications précédentes, dans lequel, pour introduire des cibles non irradiées ou pour prélever des cibles irradiées, la branche de stockage (20, 1020a, 1020b) comprend un accouplement d'extrémité (1021 a, 1021b) pour l'accouplement à un moyen d'introduction, un moyen de prélèvement et/ou un moyen combiné d'introduction et de prélèvement (1400).

9. Dispositif (1, 1001) selon l'une des revendications précédentes, dans lequel le raccord à voies multiples (60) est en outre réalisé pour relier en termes d'écoulement la branche de stockage (20, 1020a, 1020b) à la branche de mesure (30, 1030a, 1030b), dans une quatrième position de commutation.

10. Dispositif (1, 1001) selon l'une des revendications précédentes, dans lequel le système de conduits (2, 1002a, 1002b) comprend en outre une branche d'introduction (50) pourvue d'un accouplement d'extrémité (51) pour l'accouplement à un moyen d'introduction (500) pour introduire des cibles non irradiées, la branche d'introduction (50) débouchant directement dans le raccord à voies multiples (60), et le raccord à voies multiples (60) étant en outre réalisé pour relier en termes d'écoulement la branche d'introduction (50) à la branche de réacteur (10, 1010a, 1010b) ou à la branche de stockage (20, 1020a, 1020b), dans une cinquième position de commutation.

11. Dispositif (1, 1001) selon l'une des revendications précédentes, comprenant en outre un moyen d'évacuation de gaz (80, 1080) pour évacuer les gaz de transport hors de la branche de mesure (30, 1030a, 1030b), hors de la branche de stockage (20, 1020a, 1020b) et/ou hors de la branche de réacteur (10, 1010a, 1010b), le moyen d'évacuation de gaz (80) présentant un conduit d'évacuation de gaz (88) débouchant directement dans le raccord à voies multiples (60, 1060), et le raccord à voies multiples (60, 1060) étant en outre réalisé pour relier en termes d'écoulement la branche de réacteur (10, 1010a, 1010b) au conduit d'évacuation de gaz (88), dans une sixième position de commutation.

12. Dispositif (1, 1001) selon l'une des revendications précédentes, dans lequel le dispositif (1, 1001) comprend dans la branche de réacteur (10, 1010a, 1010b) une vanne d'arrêt (4, 1004a, 1004b) pour l'obturation étanche aux gaz de la branche de réacteur (10, 1010a, 1010b).

13. Dispositif (1, 1001) selon l'une des revendications précédentes, dans lequel le dispositif (1, 1001) comprend dans la branche de réacteur (10, 1010a, 1010b) un raccord de prélèvement intermédiaire (71) dans lequel débouchent une portion côté réacteur (13) de la branche de réacteur (10, 1010a, 1010b), une portion de prélèvement intermédiaire (14) de la branche de réacteur (10, 1010a, 1010b) s'étendant en direction du raccord à voies multiples (60, 1060), et une branche de prélèvement intermédiaire (72), le raccord de prélèvement intermédiaire (71) étant réalisé pour relier en termes d'écoulement la portion côté réacteur (13) à la portion de prélèvement intermédiaire (14), dans une première position de commutation, et pour relier en termes d'écoulement la portion de prélèvement intermédiaire (14) à la branche de prélèvement intermédiaire (72), dans une deuxième position de commutation.

14. Dispositif (1, 1001) selon la revendication 13, dans lequel la portion de prélèvement intermédiaire (14) comprend un sommet (17) dans la transition entre une première et une deuxième portion partielle (15, 16) à descente monotone de la portion de prélèvement intermédiaire (14), la première portion partielle (15) débouchant dans le raccord de prélèvement intermédiaire (71).

15. Dispositif (1, 1001) selon la revendication 13 ou 14, dans lequel la branche de prélèvement intermédiaire (72) est disposée en direction verticale en dessous du raccord de prélèvement intermédiaire (71).

16. Procédé pour activer des cibles d'activation de nucléides et optionnellement pour exciter énergétiquement des corps de mesure dans un doigt d'instrumentation (110, 1110a, 1110b) d'un réacteur nucléaire (100, 1100) en utilisant un dispositif (1, 1001) selon l'une des revendications précédentes pour transférer les cibles d'activation de nucléides et les corps de mesure, le procédé comprenant les étapes suivantes consistant à :
- introduire des cibles d'activation de nucléides non irradiées dans le système de conduits (2, 1002a, 1002b) du dispositif (1, 1001) accouplé au doigt d'instrumentation (110, 1110a, 1110b) ;
- transférer les cibles non irradiées via la branche de réacteur (10, 1010a, 1010b) jusque dans le doigt d'instrumentation (110, 1110a, 1110b) ;
- maintenir les cibles dans le doigt d'instrumentation (110, 1110a, 1110b) pour l'activation des nucléides par irradiation.

17. Procédé de la revendication 16, consistant en outre à :
- interrompre le maintien des cibles dans le doigt d'instrumentation (110, 1110a, 1110b) ;
- transférer les cibles depuis le doigt d'instrumentation (110, 1110a, 1110b) via la branche de réacteur (10, 1010a, 1010b) et via le raccord à voies multiples (60, 1060) jusque dans la branche de stockage (20, 1020a, 1020b) pour un stockage intermédiaire dans celle-ci ;
- transférer des corps de mesure depuis un moyen de mesure (300, 1300) accouplé à la branche de mesure ou depuis une portion de stationnement dans la branche de mesure via la branche de mesure (30, 1030a, 1030b), via le raccord à voies multiples (60, 1060) et via la branche de réacteur (10, 1010a, 1010b) jusque dans le doigt d'instrumentation (110, 1110a, 1110b) ;
- maintenir les corps de mesure dans le doigt d'instrumentation (110, 1110a, 1110b) pour une excitation énergétique ;
- transférer les corps de mesure depuis le doigt d'instrumentation (110, 1110a, 1110b) via la branche de réacteur (10, 1010a, 1010b), via le raccord à voies multiples (60, 1060) et via la branche de mesure (30, 1030a, 1030b) jusque dans le moyen de mesure (300, 1300) pour déterminer une propriété des corps de mesure qui est variable par l'excitation énergétique dans le réacteur nucléaire ;
- transférer les cibles depuis la branche de stockage (20, 1020a, 1020b) via le raccord à voies multiples (60, 1060) et via la branche de réacteur (10, 1010a, 1010b)jusque dans le doigt d'instrumentation (110, 1110a, 1110b) ;
- continuer à maintenir les cibles dans le doigt d'instrumentation (110, 1110a, 1110b).

18. Procédé selon la revendication 16 ou 17, consistant en outre à :
- transférer les cibles depuis le doigt d'instrumentation (110, 1110a, 1110b) jusque dans la branche de réacteur (10, 1010a, 1010b) ;
- transférer les cibles irradiées depuis la branche de réacteur (10, 1010a, 1010b) via le raccord à voies multiples (60, 1060) et via la branche de prélèvement (40) jusque dans un récipient de prélèvement (400) accouplé à la branche de prélèvement (40), ou transférer les cibles irradiées depuis la branche de réacteur (10, 1010a, 1010b) via le raccord à voies multiples (60, 1060) via la branche de stockage (20, 1020a, 1020b) jusque dans un récipient de prélèvement (450) accouplé à la branche de stockage (40).
